(19) Europäisches Patentamt / European Patent Office / Office européen des brevets

(11) **EP 2 241 085 B1**

(12) **FASCICULE DE BREVET EUROPEEN**

(45) Date de publication et mention
de la délivrance du brevet:
**25.04.2018 Bulletin 2018/17**

(51) Int Cl.:
***H04L 29/06*** *(2006.01)*

(21) Numéro de dépôt: **09718819.7**

(22) Date de dépôt: **27.01.2009**

(86) Numéro de dépôt international:
**PCT/FR2009/000089**

(87) Numéro de publication internationale:
**WO 2009/112693 (17.09.2009 Gazette 2009/38)**

(54) **PROCEDE D'AUTHENTIFICATION ET DE SIGNATURE D'UN UTILISATEUR AUPRES D'UN SERVICE APPLICATIF, UTILISANT UN TELEPHONE MOBILE COMME SECOND FACTEUR EN COMPLEMENT ET INDEPENDAMMENT D'UN PREMIER FACTEUR**

AUTHENTIFIZIERUNGS- UND SIGNATURVERFAHREN FÜR EINEN BENUTZER EINES ANWENDUNGSDIENSTS MIT EINEM MOBILTELEFON ALS ZWEITEM FAKTOR UND ALS UNABHÄNGIGE ERGÄNZUNG EINES ERSTEN FAKTORS

METHOD FOR AUTHENTICATION AND SIGNATURE OF A USER IN AN APPLICATION SERVICE USING A MOBILE TELEPHONE AS A SECOND FACTOR IN ADDITION TO AND INDEPENDENTLY FROM A FIRST FACTOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.01.2008 FR 0800440**

(43) Date de publication de la demande:
**20.10.2010 Bulletin 2010/42**

(73) Titulaire: **Paycool International Ltd.**
**Hong Kong S.A.R. (CN)**

(72) Inventeurs:
• **BERGSTEN, Ulrik**
**F-94100 Saint-Maur des Fosses (FR)**

• **GROSS, Christian**
**F-95450 Ableiges (FR)**
• **THIEBLEMONT, Jacques**
**F-34130 Mauguio (FR)**

(74) Mandataire: **Nicolle, Olivier**
**Ipon Global**
**29, boulevard Georges Seurat**
**92200 Neuilly-sur-Seine (FR)**

(56) Documents cités:
**US-A1- 2002 133 467     US-A1- 2004 044 739**

**Description**

La présente invention concerne un procédé permettant l'utilisation d'un téléphone mobile pour authentifier un utilisateur de façon forte auprès d'un Service applicatif et pour signer numériquement une transaction avec ce Service applicatif.

On prendra à titre d'exemple dans la suite de cette description le cas où le Service applicatif est un service de banque à distance, mais il faut bien comprendre que cet exemple n'est absolument pas limitatif, et que tout autre Service applicatif accédé par un utilisateur pourra être sécurisé à l'aide du procédé selon l'invention.

Dans l'état actuel de la technique, l'authentification d'un utilisateur auprès d'un Service applicatif est effectuée à l'aide d'un seul facteur d'authentification, typiquement constitué par un mot de passe (ou par un code PIN) attribué par le Service applicatif à l'utilisateur après son enregistrement auprès du service. A ce stade, l'utilisateur pourra donc s'authentifier auprès du Service applicatif en fournissant son identifiant d'utilisateur et son code mot de passe.

La communication du mot de passe au Service applicatif est supposée démontrer qu'on est bien en présence de l'utilisateur légitime.

Mais on sait que cela reste une authentification faible pour plusieurs raisons :

- le mot de passe est forcément suffisamment court pour que l'utilisateur puisse le mémoriser
- si de plus, l'utilisateur est libre de choisir lui-même le mot de passe, on sait qu'il fait souvent un choix simpliste, c'est-à-dire relativement facile à deviner
- un tel procédé d'authentification est enfin vulnérable à des attaques au moyen de « spywares » (logiciels espion installés à l'insu de l'utilisateur sur son poste de travail et qui capte à la source le mot de passe lorsque l'utilisateur le saisit) ou encore à des attaques de type « phishing » où l'utilisateur croit communiquer son mot de passe au Service applicatif légitime alors qu'il a en réalité été mis en contact avec un service hostile ou compromis
- enfin si le mot de passe devait être compromis d'une façon ou d'une autre, il n'est pas évident que l'utilisateur s'en aperçoive à temps pour empêcher une fraude ou même des fraudes répétées.

D'où l'idée bien connue d'utiliser en complément d'un premier facteur d'authentification, le mot de passe, un second facteur d'authentification censé démontrer qu'un dispositif matériel en possession de l'utilisateur participe effectivement à chaque transaction d'authentification ou de signature. Dans ce cadre, le mot de passe est souvent un nombre décimal, typiquement de 4 à 8 chiffres, et on l'appelle alors un PIN.

L'utilisateur est ainsi capable de se prémunir du risque d'usurpation de son identité en s'apercevant qu'il n'est plus en possession du dispositif matériel en question. Il pourra alors faire bloquer son identifiant.

Ainsi, on connaît dans l'état de la technique, un document US 2002/133467 A1 qui décrit un système de transaction éventuellement à deux facteurs d'identification. Mais ce système ne fait appel à aucun téléphone mobile pour authentifier un utilisateur. En outre, le système décrit dans ce document ne fait appel à aucun tiers de confiance pour générer à l'aide d'un code secret de l'utilisateur et d'une Clé secrète partagée uniquement avec le Tiers de confiance, un Code d'authentification à usage unique OTP pour chaque authentification de l'utilisateur auprès d'un service applicatif.

On voit que le choix du type de dispositif matériel n'est pas indifférent quant au niveau de sécurité atteint : idéalement, le dispositif doit être utilisé fréquemment et l'utilisateur doit s'en dessaisir le moins souvent possible.

Avec le taux d'équipement en téléphonie mobile atteint de nos jours, un aspect de l'invention prévoit de faire du téléphone mobile de l'utilisateur ce dispositif constituant le second facteur d'authentification.

Mais cela ne suffit pas : il convient aussi de passer d'une authentification statique où c'est une même donnée d'authentification qui sert à chaque fois à une authentification dynamique où la donnée d'authentification n'est utilisable qu'une seule fois.

La question est ici de savoir comment générer un tel authentifiant dynamique et comment cela démontre l'implication effective du téléphone mobile de l'utilisateur.

L'état de l'art montre qu'il faut prévoir un secret propre à chaque téléphone mobile et une application pour générer les authentifiants dynamiques, après la saisie du PIN, par utilisation du secret et d'une donnée de diversification, typiquement une horloge, un compteur ou un Défi en provenance du Service applicatif.

Cela soulève toutefois plusieurs questions qui ne semblent pas encore avoir trouvé de réponse globale :

- que faire pour être en position de résister à des contestations abusives d'utilisateurs (non-répudiation) ?
- comment les utilisateurs pourront-ils raisonnablement faire confiance à l'application mentionnée et comment est-elle installée sur les téléphones mobiles des utilisateurs ?
- d'où vient le secret mentionné et comment est-il protégé ?

Par ailleurs, il est intéressant de voir dans quelle mesure on peut bâtir une solution de signature à partir d'une solution de simple authentification. En fait, la problématique de la signature se décompose en deux parties :

- est-on certain que la signature émane de l'utilisateur supposé ?
- comment matérialiser l'accord de l'utilisateur en le reliant aux termes de la transaction signée ?

La première partie se réduit à l'authentification de l'utilisateur par le Service applicatif qui aura à traiter la transaction.

L'état de l'art montre que pour traiter la seconde partie, il faut présenter les termes de la transaction à l'utilisateur et obtenir de sa part une réponse, l'accord ou la signature, qui devra dépendre de ces termes et du processus de son authentification. Cette exigence fonctionnelle est appelée par les anglo-saxons « what you sign is what you see », soit : « ce qu'on signe est ce qu'on voit ». Autrement dit, on pourrait dire qu'une signature est un authentifiant contextuel.

Un but de la présente invention est par conséquent de proposer un procédé d'authentification et de signature capable de répondre à la totalité de la problématique décrite ci-dessus et ainsi d'augmenter significativement la sécurité des transactions par rapport aux mécanismes connus dans l'état de la technique.

Le principe de l'invention consiste non seulement à utiliser le téléphone mobile de l'utilisateur pour mettre en oeuvre un second facteur d'authentification d'un utilisateur auprès d'un Service applicatif, mais également à mettre en oeuvre une Application de confiance chargée par un Tiers de confiance à bord du téléphone mobile de l'utilisateur ou d'une carte SIM insérée dans le téléphone mobile de l'utilisateur. Cela permettra d'aboutir à une authentification forte de l'utilisateur, et permettra également de signer de façon sûre les transactions effectuées par cet utilisateur.

La description complète du procédé montrera que le partage de responsabilité prévue entre le Service applicatif d'une part et le Tiers de confiance d'autre part permet de respecter l'exigence de non-répudiation, aucune partie concernée n'étant en position d'être « juge et partie » :

- chaque Service applicatif est responsable de l'identité de l'utilisateur (« connaît ton client »), attribue un identifiant et un PIN, ce PIN constituant le premier facteur d'authentification au sens de la présente invention, et enregistre auprès du Tiers de confiance le numéro de mobile de l'utilisateur, conformément à la déclaration de ce dernier,
- le Tiers de confiance gère le second facteur d'authentification et à ce titre est responsable de l'Application de confiance.

Il est vrai que l'exigence de non-répudiation est encore plus forte dans le cas de la signature d'une transaction par un utilisateur que dans le cas d'une simple authentification de celui-ci. On verra que le procédé de signature de la présente invention respecte effectivement cette exigence accrue en empêchant la génération d'une signature valide en cas de « clonage » de l'Application de confiance et du secret propre au téléphone mobile de l'utilisateur, c'est-à-dire en cas de reproduction par copie de ces éléments dans un autre téléphone mobile.

Bien entendu, pour mettre en oeuvre le principe de l'invention, il sera nécessaire d'adapter le téléphone mobile et notamment son logiciel interne, et de pourvoir le serveur exécutant le Service applicatif de logiciels complémentaires spécifiques, dont l'écriture à partir du procédé décrit ici seront à la portée de l'homme du métier.

L'invention concerne par conséquent un procédé d'authentification et un procédé de signature tels que définis dans les revendications qui sont incorporées ici par référence.

Dans le détail, l'invention concerne en particulier un procédé d'authentification à deux facteurs d'un utilisateur auprès d'un Service applicatif s'exécutant sur un serveur applicatif, caractérisé en ce que le premier facteur d'authentification est un Code d'authentification PIN connu uniquement de l'utilisateur et du Service Applicatif, et en ce que le second facteur d'authentification est le Terminal de Communication Mobile de l'utilisateur sur lequel aura été installée une Application de confiance obtenue d'un Tiers de confiance ou certifiée par lui, ladite Application de confiance étant apte à générer à l'aide dudit Code d'authentification PIN et d'une Clé secrète partagée uniquement avec le Tiers de confiance, un Code d'authentification à usage unique OTP pour chaque authentification de l'utilisateur auprès du Service applicatif.

Grâce aux moyens utilisés dans ce procédé d'authentification, il est alors possible d'authentifier un utilisateur de façon forte auprès d'un Service applicatif, en procédant selon les étapes suivantes :

- suite à la saisie de son Code d'authentification PIN par l'utilisateur, une étape de génération d'un Code d'authentification à usage unique OTP à l'aide de l'Application de confiance installée sur le Terminal de Communication Mobile de l'utilisateur ;
- une étape de communication du Code d'authentification à usage unique OTP ainsi obtenu au Service applicatif ;
- une étape de transmission par le Service applicatif du Code d'authentification à usage unique sous une forme réduite au Tiers de confiance ;
- une étape de vérification du Code d'authentification à usage unique OTP par le Tiers de confiance ;
- une étape de notification du résultat de l'authentification par le Tiers de confiance au Service applicatif.

Selon une première variante du procédé, le premier facteur d'authentification, à savoir le Code d'authentification PIN, est fourni à l'utilisateur par le Service applicatif de manière sécurisée. Mais il est également possible que le Code d'authentification PIN soit choisi par l'utilisateur et communiqué au Service applicatif de manière sécurisée.

De façon similaire, la Clé secrète peut être créée par le Tiers de confiance et communiquée de manière sécurisée à l'Application de confiance, mais il est également possible qu'elle soit générée par l'Application de confiance elle-même et communiquée au Tiers de confiance de manière sécurisée.

Selon l'invention, l'Application de confiance est obtenue d'un Tiers de Confiance ou certifiée par lui, et elle est installée sur le Terminal de Communication Mobile de l'utilisateur préalablement à toute authentification de l'utilisateur.

Selon un aspect de l'invention, la Clé secrète n'est partagée qu'avec l'Application de confiance qui s'exécute sur le Terminal de Communication Mobile, et avec le Tiers de confiance, mais elle n'est pas accessible au Service applicatif, ce qui garantit l'indépendance entre les deux facteurs d'authenticité utilisés.

Le Code d'authentification à usage unique OTP est un code unique pour chaque transaction, généré dynamiquement par l'Application de confiance et ensuite communiqué par l'utilisateur au Service applicatif, sans être communiqué au Tiers de confiance. Il est généré par l'Application de confiance après saisie par l'utilisateur du Code d'authentification PIN sur le Terminal de Communication Mobile.

Avant d'utiliser le procédé d'authentification dans des transactions concrètes d'authentification d'un utilisateur, il est nécessaire d'inscrire cet utilisateur auprès du Tiers de confiance. Cette étape d'inscription se décompose de la façon suivante :

- inscrire l'utilisateur auprès du serveur du Tiers de confiance ;
- télécharger et installer l'Application de confiance dans le Terminal de Communication Mobile;
- enfin, activer ladite Application de confiance afin de la rendre fonctionnelle pour les opérations d'authentification subséquentes de l'utilisateur auprès du serveur applicatif.

De façon plus détaillée, les phases allant de l'inscription de l'utilisateur à l'activation peuvent être effectuées via un Service applicatif et comportent alors les étapes suivantes :

- une étape de déclaration de son Numéro de Mobile par l'utilisateur auprès du Service applicatif ;
- une étape consistant à demander par le Service applicatif l'inscription de l'utilisateur auprès du Tiers de confiance en lui communiquant le numéro de Mobile de l'utilisateur ;
- une étape d'attribution à l'utilisateur par le Tiers de confiance d'un Code d'authenticité suivie d'une étape d'envoi de ce Code d'authenticité au Service applicatif ;
- une étape de communication du Code d'authenticité à l'utilisateur par le Service applicatif ;
- une étape d'envoi par le Tiers de confiance d'un message de type SMS à l'utilisateur, ledit message de type SMS contenant les paramètres permettant de charger et d'installer l'Application de confiance sur le Terminal de Communication Mobile ;
- une étape de chargement et d'installation de l'Application de confiance sur le Terminal de Communication Mobile de l'utilisateur ;
- une étape d'activation de l'Application de confiance après vérification du Code d'authenticité,
- une étape de génération par l'Application de confiance d'une Clé secrète ;
- une étape de transmission sécurisée de la Clé secrète et desdits paramètres au serveur du Tiers de confiance ;
- une étape de vérification des éléments reçus par le Tiers de confiance et d'initialisation des registres de l'utilisateur;
- une étape d'envoi par le Tiers de confiance d'un message de confirmation d'activation à l'Application de confiance.

Mais les phases allant de l'inscription de l'utilisateur à l'activation peuvent aussi être effectuées directement auprès d'un Tiers de confiance, et elles comportent alors les étapes suivantes :

- une étape d'inscription de l'utilisateur auprès du Tiers de confiance ;
- une étape de déclaration de son Numéro de Mobile par l'utilisateur auprès du Tiers de confiance et de validation de celui-ci ;
- une étape de communication à l'utilisateur par le Tiers de confiance d'un Code d'authenticité ;
- une étape d'envoi par le Tiers de confiance d'un message de type SMS à l'utilisateur contenant les paramètres lui permettant de charger et installer l'Application de confiance sur son Terminal de Communication Mobile ;
- une étape de chargement et d'installation de l'Application de confiance sur le Terminal de Communication Mobile de l'utilisateur ;
- une étape d'activation de l'Application de confiance après vérification du Code d'authenticité ;
- une étape de génération par l'Application de confiance d'une Clé secrète ;
- une étape de transmission sécurisée de la Clé secrète et desdits paramètres au serveur du Tiers de confiance ;
- une étape de vérification des éléments reçus par le Tiers de confiance et d'initialisation des registres de l'utilisateur;

- une étape d'envoi d'un message de confirmation d'activation à l'Application de confiance par le Tiers de confiance.

Selon un premier mode de réalisation de l'invention, l'Application de confiance est chargée et installée dans une mémoire du Terminal de Communication Mobile, de façon à la rendre exécutable par un microprocesseur du Terminal de Communication Mobile.

En variante, l'Application de confiance est chargée et installée dans une mémoire de la carte SIM, de façon à la rendre exécutable par le microprocesseur de la carte SIM ou du Terminal de Communication Mobile.

L'invention concerne aussi un procédé de signature d'une transaction entre un serveur applicatif et un utilisateur préalablement enregistré et authentifié auprès dudit serveur applicatif. Ce procédé de signature comporte les étapes suivantes :

- une étape consistant à préparer au niveau du serveur applicatif un « Bon à exécuter » (BAE) représentatif de la transaction à signer, suivie de la transmission du « Bon à exécuter » et du Numéro de Mobile de l'utilisateur au serveur du Tiers de confiance;
- une étape consistant à générer au niveau du serveur du Tiers de confiance un Défi aléatoire puis une étape consistant à préparer et envoyer au Terminal de Communication Mobile de l'utilisateur le « Bon à exécuter » et le Défi ;
- après acceptation du « Bon à exécuter » par l'utilisateur et saisie de son Code PIN, une étape consistant à calculer au niveau de l'Application de confiance une Réponse (R4) à l'envoi du « Bon à exécuter » par le Tiers de confiance ;
- après saisie de la Réponse (R4) par l'utilisateur sur le service applicatif, calcul par le Serveur applicatif d'une Réponse réduite (Resp_r) ;
- transmission par le Serveur applicatif du Numéro de Mobile et de la Réponse réduite précédemment calculée, au Serveur du Tiers de confiance ;
- au niveau du Serveur du Tiers de confiance, calcul d'un Résultat (R6) et en fonction de la valeur dudit Résultat (R6), indiquer au Serveur applicatif si l'utilisateur a valablement signé le « Bon à exécuter » ou non.

Il est à noter que l'étape d'authentification préalable de l'utilisateur pour mettre en oeuvre ce procédé de signature peut être l'authentification à deux facteurs indépendants conforme à la présente invention, ou un autre type d'authentification.

L'invention sera mieux comprise en se référant à la description qui suit ainsi qu'aux figures, dans lesquelles :

- la figure 1 représente un organigramme du procédé d'inscription d'un utilisateur et de son Terminal de Communication Mobile auprès du service applicatif ;
- la figure 2 représente un organigramme du procédé d'authentification d'un utilisateur préalablement enregistré auprès du Service applicatif, mettant en oeuvre un Tiers de confiance et le Terminal de Communication Mobile de l'utilisateur, selon l'invention ;
- la figure 3 représente un organigramme d'un procédé de signature selon l'invention ;
- la figure 4 représente un organigramme du procédé de réinscription d'un utilisateur auprès du Service applicatif, dans le cas où une inscription préalable a été compromise ;
- la figure 5 représente un organigramme d'un procédé de désinscription d'un utilisateur auprès d'un Service applicatif.

Avant de décrire l'invention de façon plus détaillée, il est utile de définir un certain nombre de termes utilisés dans la suite de la description.

**Service applicatif** : Service souhaitant utiliser la présente invention pour authentifier de manière forte ses utilisateurs. Il peut notamment s'agir d'un service de Banque en ligne, par exemple au moyen d'internet et / ou via d'autres canaux. Ce Service applicatif est exécuté sur un serveur qui héberge l'application, et auquel les utilisateurs viennent se connecter.

**PIN** pour « Personal Indentification Number » en terminologie anglo-saxonne: il s'agit d'un Code d'authentification auprès d'un Service applicatif et qui est propre à chaque utilisateur. C'est donc un secret, connu seulement de l'utilisateur et du Service applicatif, et il constitue le premier des deux facteurs de l'authentification forte de la présente solution. Ce Code PIN est géré entièrement par le Service applicatif et non par le Tiers de confiance.

**Identifiant utilisateur** : identifiant de l'utilisateur auprès d'un Service applicatif. Il s'agit typiquement d'une chaine de caractères alphanumériques.

**Numéro de Mobile** : numéro par lequel le Terminal de Communication Mobile, ou Mobile de l'utilisateur est identifié de manière unique sur les réseaux de téléphonie mobile (plus précisément, le Numéro de Mobile est lié à une et une seule carte SIM ; lorsque celle-ci est insérée dans un Mobile, celui-ci peut être joint au moyen du Numéro de Mobile, par un appel entrant ou un SMS par exemple). Ce numéro sert aussi d'identifiant de l'utilisateur auprès du Tiers de confiance. C'est typiquement son numéro de téléphone lorsque le Terminal de Communication Mobile est un téléphone mobile.

**EP 2 241 085 B1**

**Terminal de Communication Mobile, ou Mobile** : au sens de la présente demande de brevet, on désigne par Terminal de Communication Mobile ou Mobile, tout appareil électronique portable disposant au moins d'un microprocesseur, d'une mémoire, d'un dispositif d'affichage et pouvant se connecter à un réseau de téléphonie numérique sans fil, notamment de type GSM, CDMA, UMTS ou autre, et accessible via un Numéro de Mobile. En pratique, il s'agira le plus souvent d'un terminal de téléphonie mobile ayant des capacités d'exécution de code de type java, et des capacités de communication de données. Comme cela apparaitra dans la suite, le Mobile équipé de l'Application de confiance et d'une Clé secrète constitue le second facteur de l'authentification forte selon la présente solution.

**Application de confiance** : il s'agit d'une application, typiquement de type java, installée sur le Mobile ou sur la carte SIM de celui-ci, et qui permet à l'utilisateur de s'authentifier et / ou de signer une transaction selon la présente solution. Notons que cette Application de confiance nécessite une Clé secrète qui est stockée sur le Mobile et qui n'est accessible qu'à l'Application de confiance.

**Clé secrète** : il s'agit d'un secret fort généré aléatoirement sur le Mobile et transmis de manière sécurisée au Tiers de confiance. On verra qu'à l'issue du processus d'installation et d'activation de l'Application de confiance sur le Mobile, Application de confiance et Tiers de confiance partagent ce même secret fort. A noter que ce secret fort pourrait être généré par le Tiers de confiance et transmis à l'Application de confiance de manière sécurisée. A noter également que le qualificatif « fort » signifie que l'entropie du secret est suffisante pour résister à toute attaque par force brute (ce qui n'est pas le cas pour un secret faible, à l'exemple d'un mot de passe classique).

**Tiers de confiance** : service gérant les Mobiles inscrits et à ce titre gérant notamment le procédé d'installation et d'activation de l'Application de confiance et contribuant à la vérification des OTP (pour « One Time Password » en terminologie anglo-saxonne) et des Signatures en confirmant en particulier l'implication du second facteur qu'est le Mobile. Le Tiers de confiance est une entité indépendante de celle offrant le Service applicatif.

**SMS** (pour « Short Message Service » en terminologie anglo-saxonne): message court envoyé au Mobile identifié par le Numéro de Mobile. La sécurité du réseau téléphonique numérique mobile (réseau de type fermé), garantie par les opérateurs, permet de garantir que seul le Mobile doté d'une carte SIM liée au Numéro de Mobile destinataire du SMS recevra le message.

**SMS de type push wap** : SMS spécifique comportant un message descriptif et une URL de téléchargement. A la réception d'un tel SMS, le Mobile affiche une sollicitation à destination de l'utilisateur en l'invitant à télécharger la ressource (par exemple un jeu ou une application quelconque) sur son Mobile.

**Identifiant de retrait ou ID retrait** : identifiant technique, alias transitoire du Numéro de Mobile, indiqué en paramètre de l'URL envoyée au Mobile via un message de type SMS ou SMS push wap.

**Activation de l'Application de confiance** : il s'agit d'une phase postérieure au téléchargement et à l'installation de l'Application de confiance sur le terminal mobile de communication, et qui termine le procédé d'installation et d'activation de l'Application de confiance lors de sa première exécution sur le Mobile. Lors de cette activation, une Clé secrète (Ks) est générée par l'Application de confiance, stockée localement dans le Mobile, et transmise de manière sécurisée au Tiers de confiance. Alternativement la Clé secrète (Ks) peut être reçue de manière sécurisée du Tiers de confiance et installée dans l'Application de confiance.

**Code d'authenticité** : élément différenciant, dont le but est de donner les moyens à l'utilisateur de vérifier que l'Application de confiance installée provient effectivement du Tiers de confiance. Ce code est fourni à l'utilisateur au moment de la déclaration au Tiers de confiance du Numéro de Mobile par l'utilisateur, et il est affiché lors de l'Activation de l'Application de confiance. Si ce code ne correspond pas ou est absent, l'utilisateur a la responsabilité de ne pas utiliser l'Application de confiance et de contacter le Serveur Applicatif, car il y a suspicion de fraude.

**OTP** ou « One Time Password » en terminologie anglo-saxonne : authentifiant dynamique ou code généré dynamiquement par l'Application de confiance de la présente solution après saisie par l'utilisateur de son PIN sur le Mobile. Ce code OTP est unique pour chaque authentification et doit être communiqué par l'utilisateur pour s'authentifier auprès du Service applicatif.

**HMAC** : un Code d'authentification de message (ou MAC, pour « message authentication code »), par exemple l'algorithme HMAC-SHA1, mais tout autre algorithme de calcul de MAC sûr peut également convenir. La notation C = HMAC(M, K) désigne le Code d'authentification du message M, généré à l'aide de la clé K. Ce code C ne peut être généré à partir de M que si l'on connait la clé K, cela garantit donc à la fois l'intégrité de M et son authenticité. Inversement, on ne peut pas remonter à la clé K connaissant M et C.

**Compteur** : variable interne, stockée dans le Mobile (Compteur_mobile) et dans le serveur du Tiers de confiance (Compteur_base) et permettant de diversifier les OTP générés. Lorsqu'un OTP est généré, la valeur du compteur du mobile est incrémentée et lorsqu'il est validé, la valeur du compteur est mise à jour sur le Tiers de confiance.

**Défi** : code généré aléatoirement par le Tiers de confiance lors du procédé de signature. Comme on le verra par la suite, le Défi est envoyé avec le « bon à exécuter » ou BAE à l'Application de confiance par l'intermédiaire d'un message de type SMS. Il permet d'éviter le rejeu des signatures, mais il joue également le rôle d'un secret temporaire car même un attaquant qui aurait réussi à voler les deux facteurs d'authentification aura besoin en plus du Défi pour pouvoir générer une Réponse valide.

**Réponse** : réponse calculée par l'Application de confiance à partir du BAE, du PIN, de la Clé secrète et du Défi. La fourniture d'une Réponse correcte par le Mobile prouve la mise en oeuvre des deux facteurs d'authentification, en présence du BAE, et donc manifeste le consentement de l'utilisateur sur le contenu du BAE. Notons que la Réponse n'est pas rejouable, car le Défi permet de diversifier les Réponses.

**Bon à exécuter ou BAE** : ensemble de données sur lesquelles le Service applicatif demande à l'utilisateur de s'engager lors du procédé de signature. Le BAE pourra, selon les cas, être envoyé directement à l'utilisateur en utilisant un message de type SMS, ou pourra être récupéré directement sur un serveur par l'Application de confiance en utilisant une URL récupérée du SMS envoyé par le Service applicatif. Dans le cas où le BAE est présenté à l'utilisateur à l'aide de SMS, il sera limité en taille.

**Description détaillée de la solution proposée par l'invention:**

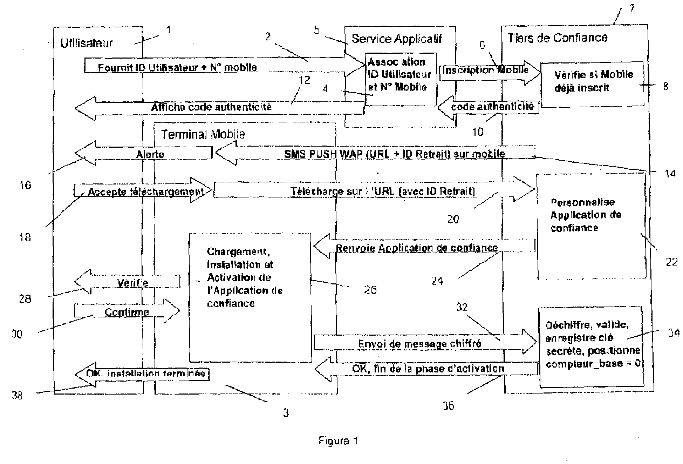

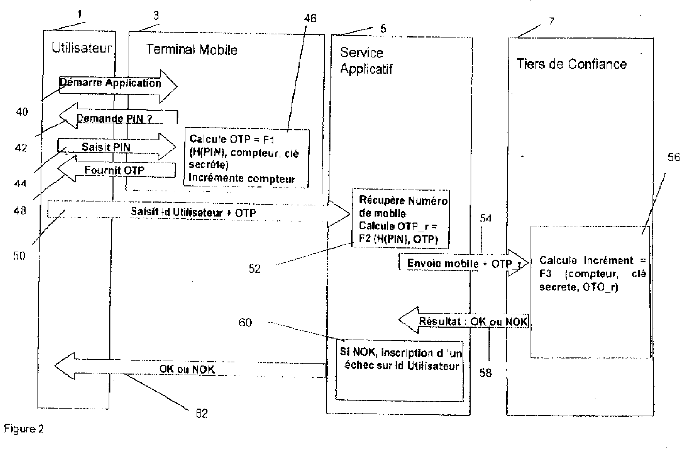

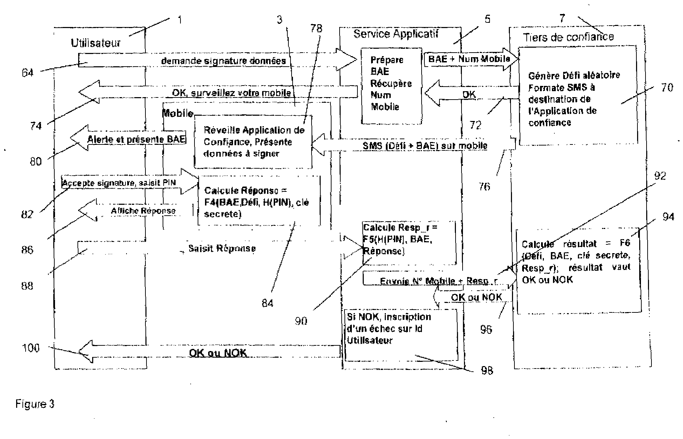

Le procédé selon l'invention va maintenant être décrit plus en détail en référence aux figures. Le procédé global comporte plusieurs procédés, à savoir un procédé d'inscription préalable de l'utilisateur (Figure 1) pour qu'il puisse utiliser l'invention, des procédés d'exploitation qui permettent d'authentifier l'utilisateur (Figure 2), puis de signer des transactions auprès du Service applicatif (Figure 3).

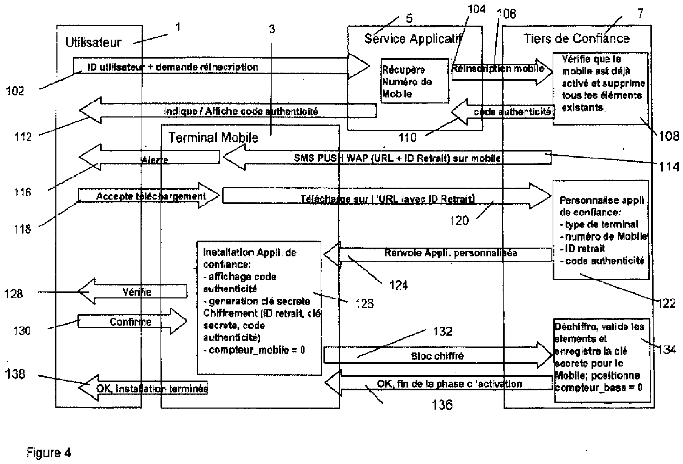

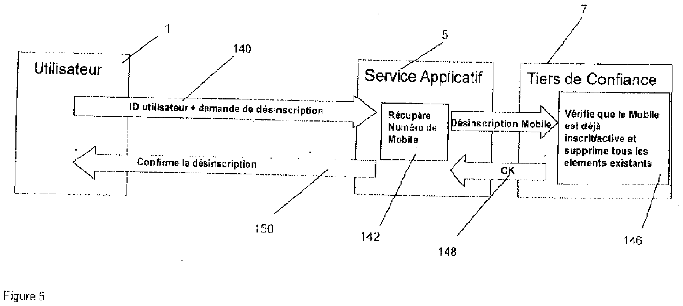

Le procédé global comporte également un procédé de réinscription (Figure 4) auprès du Service applicatif, au cas où une précédente inscription aurait été annulée, et un procédé de désinscription (Figure 5) lorsque l'utilisateur ne souhaite plus se servir de son Mobile pour effectuer des transactions auprès du Service applicatif.

On se réfère à la Figure 1 pour décrire le procédé d'inscription de l'utilisateur auprès du Service applicatif. Ce procédé d'inscription comporte une phase d'enregistrement du Mobile auprès du Service applicatif, une phase d'installation d'une Application de confiance sur le Mobile, et une phase d'Activation de l'Application de confiance.

**Procédé d'inscription** : **phase d'enregistrement du Mobile** :

On suppose que chaque utilisateur est déjà inscrit auprès d'un Serveur applicatif qui lui a attribué un Identifiant utilisateur et un PIN, comme cela est le cas dans les procédés d'authentification les plus couramment utilisés actuellement.

A ce stade, l'utilisateur pourra s'authentifier auprès du Serveur applicatif en fournissant son Identifiant utilisateur et son PIN. Mais il s'agit d'une authentification faible, basée sur un seul facteur, le PIN.

Pour compléter ce premier facteur, secret connu du seul utilisateur, par un second facteur, basé sur un dispositif matériel en possession de l'utilisateur, le procédé d'enregistrement prévoit que l'utilisateur déclare de façon formelle son Numéro de Mobile auprès du Serveur applicatif 5.

Cette déclaration va permettre au Serveur applicatif d'associer le Mobile à l'utilisateur, en une étape indiquée par la référence 4. Le Serveur applicatif 5 n'a pas nécessairement les moyens de s'assurer que l'utilisateur est bien titulaire du Numéro de mobile déclaré, par conséquent l'utilisateur est responsable de sa déclaration. C'est pourquoi, il est de préférence prévu que l'utilisateur signe cette déclaration en ligne, au moyen d'une signature électronique d'une fiabilité suffisante, ou de façon traditionnelle (courrier ou formulaire signé en face à face).

Sur la base de cette déclaration, le Serveur applicatif 5 inscrit (étape 6) le Mobile déclaré auprès du Tiers de confiance.

Dans l'étape notée 8, le serveur du Tiers de Confiance vérifie si le Mobile est déjà inscrit et activé dans sa base de données. Si le Mobile n'est pas déjà activé, le Tiers de confiance attribue un Code d'authenticité qui est transmis (étape 10) au Service applicatif et déclenche la phase d'installation de l'Application de confiance sur le Mobile, qui sera elle-même suivie par la phase d'activation de l'Application de confiance.

Le Serveur applicatif 5 confirme auprès de l'utilisateur la prise en compte de sa déclaration et communique à l'utilisateur le Code d'authenticité en l'avertissant qu'il va recevoir sur son Mobile un message de type SMS, par exemple un SMS de type push wap lui permettant d'installer une Application de confiance sur son Mobile qui affichera ce Code d'authenticité lors de sa première exécution. Si l'application une fois installée n'affiche pas le Numéro de Mobile de l'utilisateur et le Code d'authenticité annoncé, l'utilisateur aura la responsabilité de ne pas procéder à l'Activation.

**Procédé d'inscription** : **phase d'installation de l'Application de confiance :**

Suite à l'inscription du Numéro de Mobile par le Serveur applicatif, le Tiers de confiance 7 émet un SMS de type push wap ou autre (étape 14 sur la figure 1) destiné au Mobile nouvellement inscrit. Le SMS contient notamment une URL comportant un ID retrait, alias temporaire et confidentiel du Numéro de Mobile de l'utilisateur et à usage unique.

Par l'arrivée de ce SMS, l'utilisateur est invité au moyen d'une alerte (étape 16) à télécharger l'Application de confiance à l'URL véhiculée par le SMS.

A réception (18) de l'accord de l'utilisateur, envoi (20) par le Terminal de Communication Mobile d'un message d'accord de téléchargement de l'Application de confiance au serveur du Tiers de confiance.

Le Tiers de confiance sollicité via cette URL par le Mobile (étape 22) :

- récupère l'ID retrait et vérifie qu'une Activation est bien en cours pour le Mobile correspondant ;
- génère dynamiquement une version personnalisée et de préférence signée de l'Application de confiance comportant le Numéro de Mobile, l'ID retrait et le Code d'authenticité. La version personnalisée de l'Application de confiance dépend aussi éventuellement du type de Mobile.

Une fois téléchargée sur le Mobile (étape 24), l'Application de confiance est ensuite installée dans le Mobile (étape 26) après vérification de l'intégrité et de la signature du code constituant cette Application de confiance.

Si l'application était déjà installée, il convient de la réinstaller en purgeant toutes les données précédemment créées localement dans le Mobile par cette application.

Pour que l'Application de confiance puisse être signée et que le système d'exploitation du Mobile en tienne correctement compte, il est préférable de se baser au minimum sur le standard MIDP 2.0 ou équivalent.

**Procédé d'inscription : phase d'Activation de l'Application de confiance** :

L'Activation intervient lors de la première exécution de l'Application de confiance et sert à générer une Clé secrète Ks qui sera d'une part communiquée de manière sécurisée au Tiers de confiance et d'autre part mémorisée localement dans le Mobile (3) avec un Compteur au niveau Mobile (noté Compteur_mobile) initialisé à 0.

L'Activation de l'Application de confiance suppose un acte volontaire et donc responsable de l'utilisateur : pour procéder à l'Activation, il devra par exemple saisir le Code d'authenticité, ce qui a le mérite de l'obliger à en prendre activement connaissance, ce qui favorise sa vigilance.

Ainsi, lors de la première exécution, l'Application de confiance indique qu'on est en phase d'Activation, affiche le Numéro de Mobile et le Code d'authenticité et invite l'utilisateur (étape 28) à procéder à la confirmation de l'Activation en saisissant le Code d'authenticité (étape 30) si les données affichées sur le Mobile sont conformes, à savoir que :

- c'est effectivement le Numéro de Mobile qu'il avait déclaré auprès du Serveur applicatif (étape 4) ;
- c'est bien le Code d'authenticité attendu (étape 12).

Si ce n'est pas le cas, l'utilisateur est invité à ne pas procéder à l'Activation et à signaler cette anomalie ou tentative de fraude auprès du Serveur applicatif.

Lorsque la saisie effectuée (étape 30) par l'utilisateur correspond au Code d'authenticité, l'Application de confiance tire un aléa qui servira comme Clé secrète Ks pour les opérations ultérieures d'authentification et / ou de signature, comme cela sera décrit plus loin. Cette clé secrète doit être communiquée de façon sure au Tiers de Confiance.

A cet effet, l'Application de confiance :

- constitue un message contenant l'ID retrait, le Code d'authenticité, la Clé secrète et un éventuel « padding » ou bourrage,
- chiffre ce message avec la clé publique du Tiers de confiance, cette information étant contenue en dur dans le code de l'Application de confiance,
- et poste ou communique par un autre moyen le message chiffré ainsi obtenu au Tiers de confiance (étape 32).

A réception du message chiffré (ou bloc chiffré), le Tiers de confiance (étape 34) :

- déchiffre le message reçu au moyen de sa clé privée, de façon à extraire la Clé secrète Ks générée dans le Mobile, et partager cette même Clé secrète entre le Mobile et le serveur du Tiers de confiance ;
- vérifie que l'ID retrait correspond bien à un Mobile en cours d'Activation ;
- vérifie le Code d'authenticité extrait du message déchiffré ;
- initialise à 0 un Compteur, noté Compteur_base, au niveau du serveur du Tiers de confiance ;
- récupère et mémorise la Clé secrète Ks et le Compteur_base en cas de vérifications positives ;
- répond le cas échéant positivement à l'Application de confiance (étape 36), en transmettant au Terminal de Communication Mobile un message de bonne fin de l'activation de l'Application de confiance.

En cas de Réponse positive, l'Application de confiance mémorise localement dans le Mobile la Clé secrète et le Compteur_mobile initialisé à 0. L'utilisateur est enfin informé (étape 38) que l'Application de confiance est activée et que le service d'authentification est désormais ouvert.

**Procédé d'authentification**

On se réfère à la figure 2 pour décrire la phase d'exploitation du procédé d'authentification selon l'invention, l'Activation de l'Application de confiance ayant déjà été faite.

L'utilisateur du Mobile 3 souhaite s'authentifier auprès d'un Service applicatif 5 pour lequel il connaît son Identifiant utilisateur et son PIN.

En tenant compte du fait que les Services applicatifs ne mémorisent pas toujours le PIN en clair dans une base de donnée même protégée, nous introduisons ci-après une fonction H qui donne la valeur mémorisée en lieu et place du PIN à partir du PIN (et éventuellement d'autres données connues du Service applicatif, mais elles ne seront pas détaillées afin de ne pas alourdir inutilement le texte). Typiquement H est une fonction de hash (d'où la notation), il est en effet souhaitable de ne pas pouvoir effectuer facilement la fonction inverse, mais H peut également être la fonction identité si le serveur applicatif peut accéder au PIN de l'utilisateur en clair dans sa base de données (fonction identité signifie que $H(x) = x$). Ci-après, PIN désigne la valeur du PIN tel que saisi par l'utilisateur, H(PIN) désigne le résultat de la fonction H appliquée à PIN et HPIN représente la valeur substitutive au PIN telle que mémorisée par le Service applicatif (sauf erreur de saisie, HPIN devrait avoir la même valeur que H(PIN)).

L'utilisateur lance (étape 40) l'Application de confiance sur son Mobile, qui lui demande son code PIN (étape 42), et en réponse l'utilisateur saisit son PIN (étape 44).

L'Application de confiance, dans l'étape référencée 46 :

- calcule un OTP selon une fonction F1 prenant en compte (Compteur_mobile, H(PIN), Clé secrète Ks)
- incrémente le Compteur_mobile
- et affiche l'OTP (étape 48) sur l'écran du Mobile.

L'utilisateur saisit (étape 50) l'Identifiant utilisateur et l'OTP sur le Service applicatif, par l'intermédiaire de l'interface utilisateur du Service applicatif, qui peut être une interface de type connexion internet, un serveur vocal, ou tout autre interface appropriée.

Sur la base de l'Identifiant utilisateur, déjà stocké dans sa base de données (étape 4), le Service applicatif détermine (étape 52) le Numéro de Mobile et HPIN.

Puis le Service applicatif calcule un OTP réduit, noté OTP_r = F2(HPIN, OTP), qui est donc obtenu selon une fonction F2 appliquée à HPIN et à l'OTP tel que transmis par l'utilisateur dans l'étape 50.

Le Service applicatif soumet alors (étape 54) le Numéro de Mobile et l'OTP_r au serveur du Tiers de confiance.

Par rapport au Numéro de Mobile préalablement inscrit (étape 6, figure 1), le Tiers de confiance détermine la valeur du Compteur_base. Par ailleurs, il retrouve la Clé secrète Ks, enregistrée à l'étape 34, Figure 1.

Ensuite, (étape 56), le Tiers de confiance :

- calcule une valeur Incrément, égale au résultat d'une fonction F3 appliquée à (Compteur_base, Clé secrète Ks, OTP_r)
- incrémente Compteur_base de la valeur de Incrément
- et renvoie (étape 58) au Service applicatif un message « OK » si Incrément > 0, signifiant que l'utilisateur a bien été authentifié à la fois par son PIN et par l'OTP généré dans le Mobile et transmis sous forme réduite au Tiers de Confiance. Dans le cas contraire, un message « Non Ok », ou NOK, est transmis au Service applicatif, qui relaie ce message OK ou NOK à l'utilisateur (étape 62).

Exemple d'un mode de réalisation **des fonctions F1, F2 et F3 :**

Un OTP est calculé à partir de deux éléments :

- un Indicateur, noté Ind
- et un Discriminant, noté Dis.

L'Indicateur est un nombre entier strictement plus petit qu'un paramètre maxInd et en fait égal à Compteur_mobile modulo maxInd.

Si un utilisateur tire au moins un nombre maxInd d'OTP sans les faire valider positivement auprès du Tiers de confiance alors le compteur de celui-ci, Compteur_base, se retrouve désynchronisé par rapport au compteur, Compteur_mobile, de l'Application de confiance : aucun nouvel OTP ne pourra être validé sans qu'on ait au préalable resynchronisé le compteur du Tiers de confiance par rapport à celui de l'Application de confiance.

Le Discriminant est la partie discriminante de l'OTP, c'est à dire celle qu'il est impossible de générer sans connaître à la fois le Compteur, le PIN et la Clé secrète Ks.

En fin de compte, OTP = Ind + maxInd*Dis

Dans la variante décrite ci-après, basée sur un "chiffrement" basique (mais suffisant) par XOR (le OU Exclusif), il est nécessaire que le Discriminant puisse prendre toutes les valeurs possibles d'un nombre entier sur N bits.

Exemple : si l'on veut que les OTP tiennent sur 7 chiffres décimaux, il peut être judicieux de réserver 18 bits au Discriminant :

- maxInd sera alors de 38 (au-delà, un OTP généré risque de ne pas tenir sur 7 chiffres décimaux et en-deçà, on n'utilise pas de façon optimale toute la capacité de la présente solution)
- maxDis, valeur maximale du Discriminant, sera de 262144 (soit 2 à la puissance 18).

**Fonction F1** : **F1** (Compteur_mobile, H(PIN), Clé secrète) :

$$Ind = Compteur\_mobile \ modulo \ maxInd$$

On calcule deux messages M1, M2 tels que :

$$M1 = HMAC(Ind, H(PIN))$$

$$M2 = HMAC(Compteur\_mobile, Clé \ secrète)$$

Puis on calcule M'1 et M'2 définis par :

$$M'1 = M1 \ modulo \ maxDis$$

$$M'2 = M2 \ modulo \ maxDis$$

Ce qui a pour effet de raccourcir la longueur de M1, M2 ;
Et on calcule

$$M3 = M'1 \ XOR \ M'2$$

Puis la fonction retourne Ind + M3 * maxInd

**Fonction F2: F2** (HPIN, OTP) :

$$Ind = OTP \ modulo \ maxInd$$

$$A3 = OTP \ / \ maxInd$$

On calcule

$$A1 = HMAC(Ind, HPIN)$$

Puis

$$A'1 = A1 \ modulo \ maxDis$$

$$Et\ A4 = A3\ XOR\ A'1$$

Ensuite Retourner Ind + A4 * maxInd.

**Fonction F3 : F3** (Compteur_base, Clé secrète, OTP_r) :

$$Ind = OTP\_r\ modulo\ maxInd$$

$$T4 = OTP\_r\ /\ maxInd$$

On calcule un

$$Incrément = Ind - (Compteur\_base\ modulo\ maxInd)$$

$$Si\ Incrément <= 0\ Alors\ Incrément\ =\ Incrément + maxInd$$

On calcule

$$T2 = HMAC(Compteur\_base + Incrément,\ Clé\ secrète)$$

$$Et\ T'2 = T2\ modulo\ maxDis$$

$$Si\ T'2 \neq T4\ Alors\ Incrément = 0$$

Retourner Incrément.

**Procédé de signature**

On se réfère à la figure 3 pour décrire le procédé de signature selon l'invention.

Supposons que l'utilisateur du Mobile souhaite valider un ensemble de données générées par le Service applicatif et fasse une demande de signature (étape 64) au Service applicatif. Ces données peuvent être notamment un ordre de paiement ou bien un contrat. L'authentification à deux facteurs évoquée au paragraphe précédent permet de démontrer que l'on est bien en présence de l'utilisateur de manière fiable, mais on ne peut pas démontrer que l'utilisateur a visualisé et validé une ou plusieurs données particulières ; c'est l'objet du procédé de signature. Pour la mise en oeuvre du procédé de signature, on part du principe que l'Activation du Mobile de l'utilisateur a déjà été réalisée préalablement.

En outre, durant tout le procédé de signature, l'utilisateur est considéré comme étant déjà correctement authentifié sur le Service applicatif (par le procédé d'authentification de la présente solution ou bien par un autre procédé d'authentification, voire par une simple identification sans authentification), et on suppose qu'il souhaite valider un ensemble de données.

Dans l'étape référencée 66, le Service applicatif prépare l'ensemble des données à valider en fonction des éléments qu'il connaît (par exemple identité, adresse de l'utilisateur, numéro de compte, taux, tarif...) et des éléments qu'il demande à l'utilisateur (montant, durée,...) et en déduit un bon à exécuter (BAE) comportant les données essentielles sur lesquelles on demande à l'utilisateur de s'engager. On pourra également inclure dans ce BAE un hash du document d'origine contenant l'ensemble des données.

Le Service applicatif transmet au Tiers de confiance le BAE et le Numéro de Mobile de l'utilisateur (étape 68).

Le Tiers de confiance détermine (étape 70) une donnée aléatoire appelée Défi. Il envoie à l'Application de confiance un SMS (étape 76) contenant le BAE et le Défi ou communique à l'Application de confiance les éléments qui lui permettront de récupérer le BAE et le Défi. Une fois le BAE présenté à l'utilisateur (étape 80), il lui est demandé s'il souhaite le signer ou pas.

Ce dernier peut choisir de ne pas signer le BAE, ou bien il peut choisir de le signer.

Dans ce dernier cas, l'utilisateur saisit le PIN (étape 82), et l'Application de confiance, dans l'étape 84 :

- calcule Réponse = F4 (BAE, Défi, H(PIN), Clé secrète Ks),
- et affiche Réponse pour l'utilisateur.

L'utilisateur saisit Réponse sur le Service applicatif (étape 88). Le Service applicatif détermine par rapport à l'Identifiant utilisateur et sa demande de validation en cours le BAE et HPIN.

Le Service applicatif calcule (étape 90) une Réponse réduite, telle que: Resp_r = F5 (BAE, Réponse, HPIN).

Dans l'étape 92, le Service applicatif soumet Numéro de Mobile et Resp_r au Tiers de confiance.

Par rapport au Numéro de Mobile préalablement enregistré (étape 4, figure 1), le Tiers de confiance détermine le Défi et la Clé secrète Ks.

Le Tiers de confiance (étape 94) :

- calcule Résultat = F6 (Défi, Resp_r, Clé secrète Ks),
- renvoie Résultat au Service applicatif,
- efface le Défi en cas de résultat positif.

En cas de résultat négatif, un échec de signature est inscrit en regard de l'identifiant de l'utilisateur, et on pourra prévoir un blocage de toute signature au bout de 3 échecs par exemple.

Notons que Résultat est un booléen, qui indique si la validation est correcte ou pas. Ainsi, une validation correcte indique :

- qu'il y a bien eu saisie du code PIN correct de l'utilisateur,
- ET qu'il y a bien eu mise en oeuvre de la Clé secrète Ks de l'Application de confiance installée sur le Mobile,
- ET qu'il y a bien eu utilisation du Défi envoyé au Mobile,
- ET que tous ces éléments sont liés au BAE.

Partant de ce résultat, le Service applicatif peut considérer qu'il y a bien eu volonté effective et explicite de l'utilisateur de valider le contenu du BAE et de manifester son consentement sur son contenu.

**Exemple de réalisation des fonctions F4, F5 et F6 :**

Contrairement aux fonctions de génération d'OTP, il y a cette fois-ci utilisation d'un mécanisme de Défi/Réponse, et celui-ci ne fait pas intervenir de notion de Compteur.

Le seul paramètre est donc la valeur maximale de Réponse, qui est un nombre entier strictement plus petit qu'un paramètre maxResp.

Exemple : si on veut que la Réponse tienne sur 6 chiffres décimaux, maxResp vaut 1000000.

**Fonction F4 : F4** (BAE, Défi, H(PIN), Clé secrète) :

On calcule M1, M2 tels que :

$$M1 = HMAC(BAE, H(PIN))$$

$$M2 = HMAC(Défi+BAE, Clé \ secrète)$$

Puis on calcule M'1, M'2 tels que :

$$M'1 = M1 \ modulo \ maxResp$$

$$M'2 = M2 \ modulo \ maxResp$$

Retourner M'1 XOR M'2.

**Fonction F5** : **F5** (BAE, Réponse, HPIN) :

On calcule

$$A1 = HMAC(BAE, HPIN)$$

Puis

$$A'1 = A1 \text{ modulo maxResp}$$

Retourner Réponse XOR A'1.

**Fonction F6 : F6** (Défi, BAE, Resp_r, Clé secrète) :

On calcule

$$T2 = HMAC(Défi+BAE, Clé \ secrète)$$

Puis

$$T'2 = T2 \text{ modulo maxResp}$$

Retourner le booléen (T'2 == Resp_r). Ce booléen prend la valeur « VRAI » si T'2 et Réponse_r sont égaux, et prend la valeur « FAUX » sinon.

**Procédé de gestion du cycle de vie**

Concernant le cycle de vie, les processus permettant la mise en place et l'utilisation opérationnelle de la solution ont été décrits (figures 1 et 2), il reste à décrire certains autres cas liés au cycle de vie.

Les cas suivants peuvent apparaître:

- perte, oubli du code PIN par l'utilisateur
- changement du Mobile avec conservation du Numéro de Mobile
- désinstallation de l'Application de confiance par erreur ou accident
- changement du Numéro de Mobile
- vol ou perte du Mobile (et de la carte SIM associée)
- erreur sur le Numéro de Mobile lors de l'enregistrement initial
- arrêt volontaire du service par l'utilisateur.

Traitons tout de suite les cas liés au code PIN : la présente solution ne gérant pas à proprement parler ce PIN, tout le cycle de vie lié au PIN est du ressort du Service applicatif, comme déjà connu. Le Service applicatif doit donc mettre en place un procédé lié à la perte et l'oubli du code PIN (renvoi ou réinitialisation du code PIN). Le plus souvent, cette problématique est d'ailleurs déjà traitée par le Service applicatif dans la mesure où le PIN pouvait servir précédemment comme moyen d'authentification faible (à un seul facteur).

Pour pouvoir répondre aux autres cas, deux procédés particuliers sont définis : la réinscription et la désinscription de l'utilisateur.

La réinscription est décrite en rapport avec la figure 4, qui est similaire à la figure 1 correspondant à l'inscription. Par conséquent les mêmes étapes ont été désignées par les mêmes numéros de référence.

La réinscription, pour un Numéro de Mobile donné, consiste à placer au niveau du Tiers de confiance le Mobile dans un état correspondant à l'enregistrement initial, comme schématisé par l'étape 108 : la Clé secrète est effacée du serveur, un nouveau Code d'authenticité est généré (étape 10) et communiqué au Service applicatif, le Compteur_mobile est réinitialisé (étape 26), et un SMS de type PUSH WAP comportant un nouvel ID retrait est envoyé (étape 14) au mobile pour déclencher une réinstallation. Seul le Numéro de Mobile n'est pas effacé du Serveur de confiance.

La désinscription est décrite en rapport avec la figure 5. Elle consiste, pour un Numéro de Mobile donné transmis par le Service applicatif (étape 144), à effacer du serveur du Tiers de confiance l'ensemble des données liées au Mobile (étape 146). Ce dernier se retrouve donc dans un état inconnu ou non inscrit.

Il est à noter que la possession du Mobile sur lequel l'Application de confiance est installée et activée permet de tirer des OTP qui sont valides dès lors que le PIN saisi est le bon et aussi longtemps que le Tiers de confiance n'a pas reçu une demande de réinscription ou de désinscription.

Mais il faut faire attention au fait qu'une demande de réinscription peut aboutir si le Mobile est toujours muni de la carte SIM et que le Numéro de Mobile est toujours actif pour cette carte SIM. En cas de perte ou de vol de la carte SIM, il est donc recommandé de demander une désinscription. Pour les autres cas, une réinscription peut suffire, et évite d'avoir à repasser par la phase d'enregistrement (processus lourd car il faut fournir le Numéro de Mobile de manière fiable au Service applicatif).

Partant de ce constat, il est possible de proposer les règles suivantes concernant les processus à adopter en fonction du cas de figure :

| Motif | Action |
|---|---|
| Perte, oubli du code PIN | A traiter avec le Service applicatif |
| Changement du Mobile avec conservation du Numéro de Mobile | Réinscription |
| Désinstallation de l'Application de confiance par erreur ou accident | Réinscription |
| Changement du Numéro de Mobile | Enregistrement du nouveau Numéro de Mobile Éventuellement (si l'utilisateur n'a plus accès à l'ancien Numéro de Mobile) : désinscription de l'ancien Numéro de Mobile |
| Vol ou perte du Mobile (et de la carte SIM associée) | Désinscription |
| Erreur sur le Numéro de Mobile lors de l'enregistrement initial | Désinscription, suivi d'un Enregistrement |
| Arrêt volontaire du service par l'utilisateur | Désinscription |

Il est à noter que dans la description ci-dessus, l'Application de confiance est stockée dans une mémoire du Mobile. Dans une variante de la mise en oeuvre de l'invention, on peut néanmoins installer l'Application de confiance sur la carte SIM (pour « Subscriber Identity Module ») du Mobile où elle peut alors s'exécuter.

**Avantages de l'invention :**

L'invention permet de répondre aux buts visés, en proposant un procédé d'authentification forte et de signature auprès d'un Serveur applicatif, basé sur l'utilisation de deux facteurs indépendants, à savoir un code PIN de l'utilisateur sous la responsabilité du Service applicatif, comme déjà connu dans l'Etat de la technique, et le Mobile de l'utilisateur doté d'une Application de confiance et d'une Clé secrète, ces deux éléments étant sous la responsabilité d'un Tiers de confiance.

L'état de l'art prévoit la mise en oeuvre d'une application et d'un secret dans le Mobile de l'utilisateur mais comme déjà évoqué des questions restent en suspens :

- d'où vient le secret et comment est-il protégé ?
- comment assurer l'intégrité de l'application ?

Le procédé d'inscription dans la phase d'Activation de la présente invention prévoit que cette Clé secrète jouant le rôle générique du secret mentionné est tirée aléatoirement par l'Application de confiance puis communiquée au Tiers de confiance, chiffrée par une clé publique du Tiers de confiance. Dès lors que l'intégrité de l'Application de confiance est assurée (ce qui fait l'objet de la question suivante), on empêche ainsi toute interception de la Clé secrète lors de sa communication au Tiers de confiance. Par ailleurs, le respect du standard MIDP 2.0 ou équivalent permet à l'Application de confiance de mémoriser des données sur le Mobile tout en en interdisant en principe tout accès à quiconque en dehors de l'Application de confiance elle-même (à noter malgré tout un risque au moins théorique d'accès à ces données en intervenant au niveau du système d'exploitation du Mobile : nous y reviendrons plus loin en évoquant le risque de « clonage »).

L'intégrité de l'Application de confiance est assurée dans le cadre de la présente invention grâce aux caractéristiques suivantes :

- il reste possible d'installer une application susceptible de tenter de jouer le rôle de l'Application de confiance mais celle-ci ne permettra pas d'usurper l'identité de l'utilisateur par méconnaissance de la Clé secrète ; de plus, à supposer que l'installation d'une telle application malveillante intervient alors que le Mobile de l'utilisateur a été déclaré auprès du Tiers de confiance et avant Activation de l'Application de confiance par l'utilisateur : l'application malveillante qui aurait été installée à la place de l'Application de confiance ne pourra pas faire accepter de Clé secrète au Tiers de confiance par méconnaissance de l'ID retrait (communiqué au seul Mobile de l'utilisateur par SMS push wap ou équivalent) et / ou du Code d'authenticité (communiqué à l'utilisateur via le Service applicatif, donc via un autre canal que le Mobile).
- après installation et Activation et sauf à ce qu'elle soit signée par le Tiers de confiance, il n'est plus possible de modifier l'Application de confiance autrement que par effacement et remplacement de l'application (apport sécuritaire du standard MIDP 2.0 JAVA), mais dans ce cas, la Clé secrète est effacée, ce qui a pour effet de rendre inopérant cette nouvelle application vis-à-vis du Tiers de confiance.

Parmi les autres questions relatives à l'état de l'art antérieur, on relève l'exigence de la non-répudiation.

Le partage de responsabilité entre le ou les Services applicatifs et le Tiers de confiance prévu par la présente invention garantit qu'aucune partie ne pourra être en position de « juge & partie » :

- ni un Service applicatif qui connaît certes le PIN (ou le HPIN) de chacun de ses utilisateurs, car il ne pourra pas connaître la Clé secrète nécessaire à la génération d'OTP ou de Signatures (en fait, même une attaque par force brute ne lui permettra pas de déduire la Clé secrète à partir d'observations d'OTP et / ou de Signatures) ; par ailleurs, pas plus que quiconque, un Service applicatif n'est en mesure de porter atteinte à l'intégrité de l'Application de confiance (la modification de l'Application de confiance aurait pu permettre de récupérer directement la Clé secrète et l'installation d'une fausse Application de confiance aurait pu permettre de procéder à une Activation et donc de récupérer indirectement la Clé secrète)
- ni le Tiers de confiance qui connaît certes la Clé secrète de chacun des utilisateurs car il ne pourra pas connaître le PIN (ou HPIN) de ceux-ci auprès des différents Services applicatifs (en effet, il ne reçoit pas directement les OTP et les Signatures produits par l'Application de confiance, il ne reçoit qu'une forme réduite de ces données où justement l'influence du PIN aura été effacée) ; on suppose néanmoins que le Tiers de confiance ne pourra pas se permettre d'installer une Application de confiance comportant délibérément une porte dérobée et ainsi tromper de façon démontrable la confiance qui lui est faite, les Services applicatifs ayant un droit d'audit.

Grâce à ces éléments caractéristiques, l'invention apporte une solution d'authentification capable de résister aux éventuelles tentatives de contestation abusives d'utilisateurs. On voit que l'invention apporte une réelle étanchéité entre les données gérées respectivement par les Services applicatifs et le Tiers de confiance : d'où une réelle indépendance entre les deux facteurs d'authentification.

Pour supporter la fonction de signature, on a vu qu'il fallait garantir que « ce qu'on signe est ce qu'on voit » (« what you sign is what you see ».)

L'un des aspects de la présente invention prévoit l'envoi par le Tiers de confiance d'un SMS au Mobile de l'utilisateur signataire, ce SMS comportant un BAE et un Défi. L'application de confiance présente le BAE à l'utilisateur qui signe en saisissant son PIN, l'Application de confiance générant alors la Signature ou techniquement la Réponse au Défi. Cela apporte une solution effective à l'exigence du « ce qu'on signe est ce qu'on voit ». En effet, même si n'importe qui peut envoyer un SMS à l'utilisateur signataire :

- soit, l'Application de Confiance est réveillée et prend en charge le traitement mais d'une part, l'utilisateur n'acceptera de signer que s'il valide le BAE présenté, ce qui empêche donc de faire signer n'importe quoi à l'insu de l'utilisateur, et d'autre part, si le SMS n'est pas envoyé par le Tiers de confiance, il n'y a aucune chance de générer une Signature valide puisqu'on ne connaît pas alors le Défi positionné par le Tiers de confiance et envoyé par SMS au seul mobile de l'utilisateur
- soit, une autre application s'en trouve réveillée : même dans l'hypothèse où celle-ci est malveillante, elle ne pourra pas générer une Signature valide car elle n'a pas accès à la Clé secrète.

Revenons ici au risque théorique de « clonage » de l'Application de confiance.

On se rend compte qu'une Application de confiance donée avec ses données, notamment la Clé secrète, sur un Mobile autre que celui de l'utilisateur légitime ne pourra malgré tout pas réussir à générer une Signature valide : le Défi est en effet nécessaire or il n'est envoyé par SMS par le Tiers de confiance qu'au Mobile de l'utilisateur (en fait, le Mobile de l'utilisateur est celui qui contient sa carte SIM et celle-ci n'est pas donable).

Enfin sur un plan pratique et non plus seulement quant à la sécurité du procédé, on voit que la présente invention présente l'avantage d'être peu contraignante à déployer. En effet, moyennant des adaptations limitées, il est possible de renforcer un système d'authentification préexistant à un seul facteur d'authentification (un mot de passe) en le transformant en un système d'authentification à deux facteurs selon la présente invention, et ceci en préservant l'enregistrement déjà fait des utilisateurs (« connais ton client » avec attribution d'un identifiant et d'un mot de passe) . Pour ce faire, il suffit que le Service applicatif gestionnaire du système d'authentification initial :

- s'abonne auprès du Tiers de confiance en adaptant quelque peu ses traitements informatiques
- et complète l'enregistrement des utilisateurs par la mise en oeuvre du procédé d'inscription pour la phase d'enregistrement du Mobile.

Dans ce cadre, il est néanmoins recommandé que le Service applicatif oblige ses utilisateurs à renouveler leurs mots de passe (qui deviennent à cette occasion des PINs) car les anciens mots de passe peuvent avoir été préalablement compromis.

A noter que plusieurs Services applicatifs différents et indépendants, donc potentiellement gérés par des sociétés différentes, peuvent très bien renforcer chacun de leur côté leur système d'authentification préexistant comme indiqué ci-dessus et ceci sans conflits entre eux :

- le premier Service applicatif qui inscrit le Mobile d'un utilisateur auprès du Tiers de confiance entraîne l'installation et l'Activation de l'Application de confiance dans le Mobile de l'utilisateur,
- les suivants bénéficient directement de l'installation et de l'Activation déjà faite.

Pour finir, il faut souligner que dans une variante de la présente invention, l'Application de confiance peut être installée dans la carte SIM de l'utilisateur, ce qui apporte alors une sécurité encore accrue. Mais cela n'est pas indispensable pour atteindre une sécurité largement suffisante (il n'y a pas de « sécurité absolue ») et sans utiliser directement la carte SIM on obtient ainsi une solution déployable en totale indépendance des opérateurs de téléphonie mobile.

## Revendications

1. - Procédé d'authentification à deux facteurs d'un utilisateur auprès d'un Service applicatif s'exécutant sur un serveur applicatif (5), dans lequel le premier facteur d'authentification est un Code d'authentification PIN connu uniquement de l'utilisateur et du Service Applicatif, **caractérisé en ce que** le second facteur d'authentification est le Terminal de Communication Mobile (3) de l'utilisateur sur lequel aura été installée une Application de confiance obtenue d'un Tiers de confiance ou certifiée par lui, ladite Application de confiance étant apte à générer à l'aide dudit Code d'authentification PIN et d'une clé secrète (Ks) partagée uniquement avec le Tiers de confiance, un Code d'authentification à usage unique (OTP) pour chaque authentification de l'utilisateur auprès du Service applicatif, et **caractérisé en outre en ce que** l'authentification d'un utilisateur auprès d'un Service applicatif comporte les étapes suivantes :

   - suite à la saisie de son Code d'authentification PIN par l'utilisateur, une étape (46) de génération d'un Code d'authentification à usage unique (OTP) à l'aide de l'Application de confiance installée sur son Terminal de Communication Mobile (3) ;
   - une étape (50) de communication du Code d'authentification à usage unique (OTP) ainsi obtenu au Service applicatif ;
   - une étape (54) de transmission par le Service applicatif du Code d'authentification à usage unique (OTP) sous une forme réduite, obtenu à l'aide dudit Code d'authentification PIN, au Tiers de confiance ;
   - une étape (56) de vérification du Code d'authentification à usage unique (OTP) sous une forme réduite par le Tiers de confiance à l'aide de ladite clé secrète (Ks);
   - une étape (58) de notification du résultat de la vérification par le Tiers de confiance au Service applicatif.

2. - Procédé d'authentification selon la revendication 1, **caractérisé en ce que** le premier facteur d'authentification, à savoir le Code d'authentification PIN, est fourni à l'utilisateur par le Service applicatif de manière sécurisée.

3. - Procédé d'authentification selon la revendication 1, **caractérisé en ce que** le premier facteur d'authentification, à savoir le Code d'authentification PIN, est choisi par l'utilisateur et communiqué au Service applicatif de manière sécurisée.

**4.** . Procédé d'authentification selon la revendication 1, **caractérisé en ce que** la Clé secrète (Ks) est créée par le Tiers de confiance et communiquée de manière sécurisée à l'Application de confiance.

**5.** . Procédé d'authentification selon la revendication 1, **caractérisé en ce que** la Clé secrète (Ks) est générée par l'Application de confiance et communiquée au Tiers de confiance de manière sécurisée.

**6.** . Procédé d'authentification selon l'une quelconque des revendications précédentes, **caractérisé en ce qu'**il comporte, préalablement à l'authentification de l'utilisateur, une étape d'inscription de l'utilisateur auprès du Serveur (7) du Tiers de confiance, ladite inscription comportant des étapes consistant à:

- inscrire (2, 4, 6, 8, 10, 12) l'utilisateur auprès du serveur (7) du Tiers de confiance ;
- télécharger et installer (14, 16, 18, 20, 22, 26, 28, 30) l'Application de confiance dans le Terminal de Communication Mobile (3);
- activer (32, 34, 36, 38) ladite Application de confiance afin de la rendre fonctionnelle pour les opérations d'authentification subséquentes de l'utilisateur auprès du serveur applicatif (5).

**7.** . Procédé d'authentification selon la revendication 6, **caractérisé en ce que** les phases d'inscription jusqu'à l'activation d'un utilisateur auprès d'un Tiers de confiance sont effectuées via un Service applicatif et comportent les étapes suivantes :

- une étape (2) de déclaration de son Numéro de Mobile par l'utilisateur auprès du Service applicatif ;
- une étape (6) consistant à demander par le Service applicatif l'inscription de l'utilisateur auprès du Tiers de confiance en lui communiquant le Numéro de Mobile de l'utilisateur ;
- une étape (8) d'attribution à l'utilisateur par le Tiers de confiance d'un Code d'authenticité suivie d'une étape (10) d'envoi de ce Code d'authenticité au Service applicatif ;
- une étape (12) de communication du Code d'authenticité à l'utilisateur par le Service applicatif ;
- une étape (14) d'envoi par le Tiers de confiance d'un message de type SMS à l'utilisateur, ledit message de type SMS contenant les paramètres permettant de charger et d'installer l'Application de confiance sur le Terminal de Communication Mobile ;
- une étape (26) de chargement et d'installation de l'Application de confiance sur le Terminal de Communication Mobile de l'utilisateur ;
- une étape d'activation de l'Application de confiance après vérification (28,30) du Code d'authenticité,
- une étape de génération par l'Application de confiance d'une Clé secrète ;
- une étape (32) de transmission sécurisée de la Clé secrète et desdits paramètres au serveur du Tiers de confiance ;
- une étape (34) de vérification des éléments reçus par le Tiers de confiance et d'initialisation des registres de l'utilisateur ;
- une étape (36) d'envoi par le Tiers de confiance d'un message de confirmation d'activation à l'Application de confiance.

**8.** . Procédé d'authentification selon la revendication 6, **caractérisé en ce que** les phases d'inscription et d'activation d'un utilisateur sont effectuées directement auprès d'un Tiers de confiance et comportent les étapes suivantes :

- une étape (6) d'inscription de l'utilisateur auprès du Tiers de confiance ;
- une étape (8) de déclaration de son Numéro de Mobile par l'utilisateur auprès du Tiers de confiance et de validation de celui-ci ;
- une étape (10) de communication à l'utilisateur par le Tiers de confiance d'un Code d'authenticité ;
- une étape (14) d'envoi par le Tiers de confiance d'un message de type SMS à l'utilisateur contenant les paramètres lui permettant de charger et installer l'Application de confiance sur son Terminal de Communication Mobile ;
- une étape (26) de chargement et d'installation de l'Application de confiance sur le Terminal de Communication Mobile de l'utilisateur ;
- une étape d'activation de l'Application de confiance après vérification (28,30) du Code d'authenticité ;
- une étape de génération par l'Application de confiance d'une Clé secrète ;
- une étape (32) de transmission sécurisée de la Clé secrète et desdits paramètres au serveur du Tiers de confiance ;
- une étape (34) de vérification des éléments reçus par le Tiers de confiance et d'initialisation des registres de l'utilisateur ;
- une étape (36) d'envoi d'un message de confirmation d'activation à l'Application de confiance par le Tiers de confiance.

9. . Procédé d'authentification selon la revendication 7 ou la revendication 8, **caractérisé en ce que** l'Application de confiance est chargée et installée dans une mémoire du Terminal de Communication Mobile, de façon à la rendre exécutable par un microprocesseur du Terminal de Communication Mobile.

10. . Procédé d'authentification selon la revendication 7 ou la revendication 8, **caractérisé en ce que** l'Application de confiance est chargée et installée dans une mémoire de la carte SIM, de façon à la rendre exécutable par le microprocesseur de la carte SIM ou du Terminal de Communication Mobile.

11. . Procédé d'authentification selon la revendication 7 ou la revendication 8, caractérisé en ce l'étape d'Activation de l'Application de confiance est exécutée lors de la première exécution de l'Application de confiance et comporte les étapes suivantes :

- Affichage (28) sur l'écran du Terminal de Communication Mobile du Code d'authenticité, pour vérification par l'utilisateur de sa conformité avec le Code d'authenticité affiché lors de l'étape d'enregistrement du Terminal de Communication Mobile ;
- A réception (30) par le Terminal de Communication Mobile d'une confirmation par l'utilisateur de la concordance du Code d'authenticité affiché avec le Code d'authenticité attendu ;
- Génération par l'Application de confiance d'une Clé secrète (Ks) ;
- Construction d'un message, à partir de l'identifiant de retrait, de la Clé secrète (Ks), et du Code d'authenticité ;
- Chiffrement dudit message à l'aide de la clé publique du Tiers de confiance ;
- Positionnement à zéro d'un compteur (compteur_mobile) de mots de passe à usage unique (OTP) du Terminal de Communication Mobile ;
- Transmission (32) du message ainsi chiffré au serveur (7) du Tiers de confiance ;
- à réception par le serveur du Tiers de confiance, déchiffrement (34) dudit message chiffré, à l'aide de la clé privée du Tiers de confiance, de façon à extraire la Clé secrète (Ks) générée dans le Mobile et partager cette même Clé secrète (Ks) entre l'Application de confiance et le serveur du Tiers de confiance ;
- Vérification du Code d'authenticité extrait du message déchiffré ;
- Positionnement à zéro d'un compteur (Compteur_base) de mots de passe à usage unique (OTP) au niveau du serveur du Tiers de Confiance ;
- Transmission (36) au Terminal de Communication Mobile d'un message de bonne fin de l'activation de l'Application de confiance.

12. . Procédé d'authentification selon l'une quelconque des revendications précédentes, **caractérisé en ce que** l'authentification d'un utilisateur à l'aide du second facteur d'authentification comporte :

- une étape (40) consistant pour l'utilisateur à lancer sur son Terminal de Communication Mobile (3) l'Application de confiance préalablement activée et à saisir (42,44) son Code PIN sur ledit Terminal de Communication Mobile (3);
- une étape (46) consistant à calculer le Code d'authentification à usage unique (OTP) dans le Terminal de Communication Mobile (3) au moyen de l'Application de confiance, puis à afficher (48) le Code d'authentification à usage unique (OTP) ainsi calculé sur l'écran du Terminal de Communication Mobile;
- une étape (50) consistant à demander à l'utilisateur de saisir au niveau du serveur applicatif (5) son identifiant (ID) et le Code d'authentification à usage unique (OTP) ainsi calculé ;
- au niveau du serveur applicatif (5), une étape (52) consistant à récupérer le Numéro de Mobile et la valeur substitutive au PIN telle que mémorisée par le Service applicatif, HPIN, à partir de l'identifiant mémorisé de l'utilisateur, puis à calculer un mot de passe réduit (OTP_r) et à transmettre (54) le Numéro de Mobile et le mot de passe réduit (OTP_r) au serveur (7) du Tiers de confiance ;
- au niveau du serveur (7) du Tiers de confiance, une étape (56) consistant à calculer une valeur Incrément puis à incrémenter la valeur dudit compteur (Compteur_base) de la valeur Incrément calculée, puis une étape (58) consistant à renvoyer au serveur applicatif un signal OK si l'Incrément est supérieur à zéro, ou un signal NON OK dans le cas contraire;
- au niveau du serveur applicatif (5), si le signal reçu du serveur (7) du Tiers de confiance est OK, une étape (62) consistant à notifier à l'utilisateur que son authentification auprès du Service applicatif (15) est réussie, et dans le cas contraire, à notifier à l'utilisateur que son authentification à échoué et lui refuser l'accès au Service applicatif (15).

**13.** . Procédé d'authentification selon la revendication 12, **caractérisé en ce que** le Code d'authentification à usage unique (OTP) est calculé selon une fonction (F1) du Code d'authentification PIN ou le résultat d'une fonction H appliqué à PIN, H(PIN), du compteur (Compteur_mobile) du Terminal de Communication Mobile et de la Clé secrète (Ks) partagée avec le serveur du Tiers de confiance.

**14.** . Procédé d'authentification selon la revendication 13, **caractérisé en ce que** le mot de passe réduit (OTP_r) est calculé selon une fonction (F2) de HPIN et du Code d'authentification à usage unique (OTP).

**15.** . Procédé d'authentification selon la revendication 13, **caractérisé en ce que** la valeur Incrément est calculée selon une fonction (F3) de la valeur du compteur (Compteur_base) du serveur du Tiers de Confiance, de la Clé secrète (Ks) et du mot de passe réduit (OTP_r).

**16.** . Procédé de signature d'une transaction entre un serveur applicatif (5) et un utilisateur préalablement enregistré et authentifié auprès dudit serveur applicatif (5) conformément à un procédé d'authentification selon l'une quelconque des revendications 1 à 16, **caractérisé en ce qu'**il comporte les étapes suivantes :

- une étape (66) consistant à préparer au niveau du serveur applicatif (5) un « Bon à exécuter » (BAE) représentatif de la transaction à signer, suivie de la transmission (68) du « Bon à exécuter » et du Numéro de Mobile de l'utilisateur au serveur (7) du Tiers de confiance;
- une étape (70) consistant à générer au niveau du serveur (7) du Tiers de confiance un Défi aléatoire, puis une étape (76) consistant à préparer et envoyer au Terminal de Communication Mobile (3) de l'utilisateur le « Bon à exécuter » et le Défi ;
- après acceptation (82) du « Bon à exécuter » par l'utilisateur et saisie de son Code PIN, une étape (84) consistant à calculer au niveau de l'Application de confiance une Réponse (R4) à l'envoi du « Bon à exécuter » par le Tiers de confiance ;
- après saisie (88) de la Réponse (R4) par l'utilisateur sur le Service applicatif, calcul (90) par le Serveur applicatif d'une Réponse réduite (Resp_r);
- transmission (92) par le serveur applicatif (5) du Numéro de Mobile et de la Réponse réduite (Resp_r) précédemment calculée, au Serveur (7) du Tiers de confiance ;
- au niveau du serveur (7) du Tiers de confiance, calcul (94) d'un Résultat (R6) et en fonction de la valeur dudit Résultat (R6), indiquer au Service applicatif (5) si l'utilisateur a valablement signé le « Bon à exécuter » ou non.

**17.** . Procédé de signature selon la revendication 16, **caractérisé en ce que** ladite Réponse (R4) à l'envoi du « Bon à exécuter » par le Tiers de confiance, est calculée par l'Application de confiance selon une fonction (F4) du « Bon à exécuter », du Défi, de PIN, et de la Clé secrète (Ks).

**18.** . Procédé de signature selon la revendication 16, **caractérisé en ce que** ladite Réponse réduite (Resp_r) est calculée par le Service applicatif selon une fonction (F5) de H(PIN), du « Bon à exécuter », de ladite Réponse (R4).

**19.** . Procédé de signature selon la revendication 16, **caractérisé en ce que** ledit Résultat (R6) est une fonction booléenne (F6) du Défi, de la Clé secrète (Ks), et de la Réponse réduite (Resp_r).

**Patentansprüche**

**1.** Authentifizierungsverfahren mit zwei Faktoren für einen Benutzer eines Anwendungsdienstes, der auf einem Anwendungsserver (5) ausgeführt wird, bei dem der erste Authentifizierungsfaktor ein PIN-Authentifizierungscode ist, der nur dem Benutzer und dem Anwendungsdienst bekannt ist, **dadurch gekennzeichnet, dass** der zweite Authentifizierungsfaktor das mobile Kommunikationsendgerät (3) des Benutzers ist, auf dem eine vertrauenswürdige Anwendung installiert ist, die von einem vertrauenswürdigen Dritten erhalten oder von diesem zertifiziert wird, wobei die vertrauenswürdige Anwendung geeignet ist, mit Hilfe des PIN-Authentifizierungscodes und eines Geheimschlüssels (Ks), der nur mit dem vertrauenswürdigen Dritten geteilt wird, einen Authentifizierungscode zur einmaligen Verwendung (OTP) für jede Authentifizierung des Benutzers bei dem Anwendungsdienst zu erzeugen, und ferner **dadurch gekennzeichnet, dass** die Authentifizierung eines Benutzers bei einem Anwendungsdienst die folgenden Schritte umfasst:

- nach der Eingabe seines PIN-Authentifizierungscodes durch den Benutzer einen Schritt (46) der Erzeugung eines Authentifizierungscodes zur einmaligen Verwendung (OTP) mit Hilfe der auf seinem mobilen Kommunikationsendgerät (3) installierten vertrauenswürdigen Anwendung;
- einen Schritt (50) der Kommunikation des so erhaltenen Authentifizierungscode zur einmaligen Verwendung (OTP) an den Anwendungsdienst;
- einen Schritt (54) der Übertragung des Authentifizierungscodes zur einmaligen Verwendung OTP) in einer reduzierten Form, der mit Hilfe des PIN-Authentifizierungscodes erhalten wird, durch den Anwendungsdienst an den vertrauenswürdigen Dritten;
- einen schritt (56) der Überprüfung des Authentifizierungscodes zur einmaligen Verwendung (OTP) in reduzierter Form durch den vertrauenswürdigen Dritten mit Hilfe des Geheimschlüssels (Ks);
- einen Schritt (58) der Mitteilung des Resultats der Überprüfung durch den vertrauenswürdigen Dritten an den Anwendungsdienst.

2. Authentifizierungsverfahren nach Anspruch 1, **dadurch gekennzeichnet, dass** der erste Authentifizierungsfaktor, nämlich der PIN-Authentifizierungscode, an den Benutzer durch den Anwendungsdienst auf gesicherte Weise geliefert wird.

3. Authentifizierungsverfahren nach Anspruch 1, **dadurch gekennzeichnet, dass** der erste Authentifizierungsfaktor, nämlich der PIN-Authentifizierungscode, vom Benutzer ausgewählt und auf gesicherte Weise an den Anwendungsdienst kommuniziert wird.

4. Authentifizierungsverfahren nach Anspruch 1, **dadurch gekennzeichnet, dass** der Geheimschlüssel (Ks) von dem vertrauenswürdigen Dritten erzeugt und auf gesicherte Weise an die vertrauenswürdige Anwendung kommuniziert wird.

5. Authentifizierungsverfahren nach Anspruch 1, **dadurch gekennzeichnet, dass** der Geheimschlüssel (Ks) von der vertrauenswürdigen Anwendung erzeugt und an den vertrauenswürdigen Dritten auf gesicherte Weise kommuniziert wird.

6. Authentifizierungsverfahren nach einem der vorhergehenden Ansprüche, **dadurch gekennzeichnet, dass** es vor der Authentifizierung des Benutzers einen Schritt der Eintragung des Benutzers beim Server (7) des vertrauenswürdigen Dritten umfasst, wobei die Eintragung Schritte umfasst, darin bestehend:

- den Benutzer beim Server (7) des vertrauenswürdigen Dritten einzutragen (2, 4, 6, 8, 10, 12);
- die vertrauenswürdige Anwendung in das mobile Kommunikationsendgerät (3) fernzuladen und zu installieren (14, 16, 18, 20, 22, 26, 28, 30) ;
- die vertrauenswürdige Anwendung zu aktivieren (32, 34, 36, 38), um sie für die anschließenden Authentifizierungsvorgänge des Benutzers beim Anwendungsserver (5) funktionell zu machen.

7. Authentifizierungsverfahren nach Anspruch 6, **dadurch gekennzeichnet, dass** die Eintragungsphasen bis zur Aktivierung eines Benutzers bei einem vertrauenswürdigen Dritten über einen Anwendungsdienst erfolgen und die folgenden Schritte umfassen:

- einen Schritt (2) der Kundgebung seiner Mobilnummer durch den Benutzer beim Anwendungsdienst;
- einen Schritt (6), der darin besteht, vom Anwendungsdienst die Eintragung des Benutzers bei dem vertrauenswürdigen Dritten zu fordern, wobei ihm die Mobilnummer des Benutzers mitgeteilt wird;
- einen Schritt (8) der der Zuteilung eines Authentizitätscodes an den Benutzer durch den vertrauenswürdigen Dritten, gefolgt von einem Schritt (10) des Sendens dieses Authentizitätscodes an den Anwendungsdienst;
- einen Schritt (12) der Kommunikation des Authentizitätscodes an den Benutzer durch den Anwendungsdienst;
- einen Schritt (14) des Sendens einer Nachricht vom Typ SMS an den Benutzer durch den vertrauenswürdigen Dritten, wobei die SMS-Nachricht die Parameter enthält, die es ermöglichen, die vertrauenswürdige Anwendung auf dem mobilen Kommunikationsendgerät zu laden und zu installieren;
- einen Schritt (26) des Ladens und Installierens der vertrauenswürdigen Anwendung auf dem mobilen Kommunikationsendgerät des Benutzers;
- einen Schritt der Aktivierung der vertrauenswürdigen Anwendung nach Überprüfung (28, 30) des Authentizitätscodes;

- einen Schritt der Erzeugung eines Geheimschlüssels durch die vertrauenswürdige Anwendung;
- einen Schritt (32) der gesicherten Übertragung des Geheimschlüssels und der Parameter an den Server des vertrauenswürdigen Dritten;
- einen Schritt (34) der Überprüfung der von dem vertrauenswürdigen Dritten empfangenen Elemente und der Initialisierung der Register des Benutzers;
- einen Schritt (36) des Sendens einer Aktivierungsbestätigungsnachricht durch den vertrauenswürdigen Dritten an die vertrauenswürdige Anwendung.

8. Authentifizierungsverfahren nach Anspruch 6, **dadurch gekennzeichnet, dass** die Eintragungs- und Aktivierungsphasen eines Benutzers direkt bei einem vertrauenswürdigen Dritten erfolgen und die folgenden Schritte umfassen:

- einen Schritt (6) der Eintragung des Benutzers bei dem vertrauenswürdigen Dritten;
- einen Schritt (8) der Kundgebung seiner Mobilnummer durch den Benutzer bei dem vertrauenswürdigen Dritten und Validierung derselben;
- einen Schritt (10) der Kommunikation eines Authentizitätscodes an den Benutzer durch den Anwendungsdienst;
- einen Schritt (14) des Sendens einer Nachricht vom Typ SMS an den Benutzer durch den vertrauenswürdigen Dritten, wobei die SMS-Nachricht die Parameter enthält, die es ermöglichen, die vertrauenswürdige Anwendung auf seinem mobilen Kommunikationsendgerät zu laden und zu installieren;
- einen Schritt (26) des Ladens und Installierens der vertrauenswürdigen Anwendung auf dem mobilen Kommunikationsendgerät des Benutzers;
- einen Schritt der Aktivierung der vertrauenswürdigen Anwendung nach Überprüfung (28, 30) des Authentizitätscodes;
- einen Schritt der Erzeugung eines Geheimschlüssels durch die vertrauenswürdige Anwendung;
- einen Schritt (32) der gesicherten Übertragung des Geheimschlüssels und der Parameter an den Server des vertrauenswürdigen Dritten;
- einen Schritt (34) der Überprüfung der von dem vertrauenswürdigen Dritten empfangenen Elemente und der Initialisierung der Register des Benutzers;
- einen Schritt (36) des Sendens einer Aktivierungsbestätigungsnachricht durch den vertrauenswürdigen Dritten an die vertrauenswürdige Anwendung.

9. Authentifizierungsverfahren nach Anspruch 7 oder Anspruch 8, **dadurch gekennzeichnet, dass** die vertrauenswürdige Anwendung in einem Speicher des mobilen Kommunikationsendgeräts geladen und installiert wird, um sie durch einen Mikroprozessor des mobilen Kommunikationsendgeräts ausführbar zu machen.

10. Authentifizierungsverfahren nach Anspruch 7 oder Anspruch 8, **dadurch gekennzeichnet, dass** die vertrauenswürdige Anwendung in einem Speicher der SIM-Karte geladen und installiert wird, um sie von dem Mikroprozessor der SIM-Karte oder des mobilen Kommunikationsendgeräts ausführbar zu machen.

11. Authentifizierungsverfahren nach Anspruch 7 oder Anspruch 8, **dadurch gekennzeichnet, dass** der Schritt der Aktivierung der vertrauenswürdigen Anwendung bei der ersten Ausführung der vertrauenswürdigen Anwendung ausgeführt wird und die folgenden Schritte umfasst:

- Anzeige (28) des Authentizitätscodes auf dem Bildschirm des mobilen Kommunikationsendgeräts zur Überprüfung seiner Konformität mit dem während des Registrierungsschrittes des mobilen Kommunikationsendgeräts angezeigten Authentizitätscode durch den Benutzer;
- durch das mobile Kommunikationsendgerät Empfang (30) einer Bestätigung der Übereinstimmung des angezeigten Authentizitätscodes mit dem erwarteten Authentizitätscode durch den Benutzer;
- durch die vertrauenswürdige Anwendung Erzeugung eines Geheimschlüssels (Ks);
- Erstellung einer Nachrichtung auf Basis der Rückzugskennung, des Geheimschlüssels (Ks) und des Authentizitätscodes;
- Verschlüsselung der Nachrichtung mit Hilfe des öffentlichen Schlüssels des vertrauenswürdigen Dritten;
- Stellen eines Zählers (Zähler_Mobil) von Passwörtern zur einmaligen Verwendung (OTP) des mobilen Kommunikationsendgeräts auf Null;
- Übertragen (32) der so verschlüsselten Nachrichtung an den Server (7) des vertrauenswürdigen Dritten;
- bei Empfang durch den Server des vertrauenswürdigen Dritten Entschlüsselung (34) der verschlüsselten Nachrichtung mit Hilfe des Privatschlüssels des vertrauenswürdigen Dritten, um den in dem Mobilgerät erzeugten Geheimschlüssel (Ks) zu entnehmen und diesen selben Geheimschlüssel (Ks) zwischen der vertrauenswürdigen Anwendung und dem Server des vertrauenswürdigen Dritten zu teilen;
- Überprüfen des aus der entschlüsselten Nachricht entnommenen Authentizitätscodes;
- Stellen eines Zählers (Zähler_Basis) von Passwörtern zur einmaligen Verwendung (OTP) im Bereich des Servers des vertrauenswürdigen Dritten auf Null;
- Übertragung (36) einer Nachricht über die ordnungsgemäße Beendigung der Aktivierung der vertrauenswürdigen Anwendung an das mobile Kommunikationsendgerät.

12. Authentifizierungsverfahren nach einem der vorhergehenden Ansprüche, **dadurch gekennzeichnet, dass** die Authentifizierung eines Benutzers mit Hilfe des zweiten Authentifizierungsfaktors umfasst:

- einen Schritt (40), der darin besteht, auf seinem mobilen Kommunikationsendgerät (3) die vorher aktivierte vertrauenswürdige Anwendung zu starten und seinen PIN-Code auf dem mobilen Kommunikationsendgerät (3) einzugeben (42, 44);
- einen Schritt (46), darin bestehend, den Authentifizierungscode zur einmaligen Verwendung (OTP) in dem mobilen Kommunikationsendgerät (3) mit Hilfe der vertrauenswürdigen Anwendung zu berechnen, dann den so berechneten Authentifizierungscode zur einmaligen Verwendung (OTP) auf dem Bildschirm des mobilen Kommunikationsendgeräts anzuzeigen (48) ;
- einen Schritt (50), darin bestehend, den Benutzer aufzufordern, im Bereich des Anwendungsservers (5) seine Kennung (ID) und den so berechneten Authentifizierungscode zur einmaligen Verwendung (OTP) einzugeben;
- im Bereich des Anwendungsservers (5) einen Schritt (52), darin bestehend, die Mobilnummer und den PIN-Ersatzwert, wie vom Anwendungsdienst gespeichert, HPIN, auf Basis der gespeicherten Kennung des Benutzers wieder zu verwenden, dann ein reduziertes Passwort (OTP_r) zu berechnen und die Mobilnummer und das reduzierte Passwort (OTP_r) an den Server (7) des vertrauenswürdigen Dritten zu übertragen (54);
- im Bereich des Servers (7) des vertrauenswürdigen Dritten einen Schritt (56), darin bestehend, einen Inkrementwert zu berechnen, dann den Wert des Zählers (Zähler_Basis) des berechneten Inkrementwerts zu inkrementieren, dann einen Schritt (58), darin bestehend, an den Anwendungsserver ein OK-Signal, wenn das Inkrement größer als Null ist, oder im umgekehrten Fall ein NICHT OK-Signal zurückzusenden;
- im Bereich des Anwendungsservers (5), wenn das von dem Server (7) des vertrauenswürdigen Dritten empfangene Signal OK ist, einen Schritt (62), darin bestehend, dem Benutzer mitzuteilen, dass seine Authentifizierung beim Anwendungsdienst (15) erfolgreich war, und im umgekehrten Fall dem Benutzter mitzuteilen, dass seine Authentifizierung gescheitert ist, und ihm den Zugang zum Anwendungsdienst (15) zu verweigern.

13. Authentifizierungsverfahren nach Anspruch 12, **dadurch gekennzeichnet, dass** der Authentifizierungscode zur einmaligen Verwendung (OTP) nach einer Funktion (F1) des PIN-Authentifizierungscodes oder dem Resultat einer an dem PIN angewandten H-Funktion, H(PIN), des Zählers (Zähler_Mobil) des mobilen Kommunikationsendgeräts und des Geheimschlüssels (Ks), der mit dem Server des vertrauenswürdigen Dritten geteilt ist, berechnet wird.

14. Authentifizierungsverfahren nach Anspruch 13, **dadurch gekennzeichnet, dass** das reduzierte Passwort (OTP_r) nach einer Funktion (F2) des HPIN und des Authentifizierungscodes zur einmaligen Verwendung (OTP) berechnet wird.

15. Authentifizierungsverfahren nach Anspruch 13, **dadurch gekennzeichnet, dass** der Inkrementwert nach einer Funktion (F3) des Werts des Zählers (Zähler_Basis) des Servers des vertrauenswürdigen Dritten, des Geheimschlüssels (Ks) und des reduzierten Passworts (OTP_r) berechnet wird.

16. Signaturverfahren einer Transaktion zwischen einem Anwendungsserver (5) und einem Benutzer, der vorher bei dem Anwendungsserver (5) gemäß einem Authentifizierungsverfahren nach einem der Ansprüche 1 bis 16 registriert und authentifiziert wurde, **dadurch gekennzeichnet, dass** es die folgenden Schritte umfasst:

- einen Schritt (66), darin bestehend, im Bereich des Anwendungsservers (5) ein "auszufüllendes Formular" (BAE) vorzubereiten, das für die zu signierende Transaktion repräsentativ ist, gefolgt von der Übertragung (68) des "auszufüllenden Formulars" und der Mobilnummer des Benutzers an den Server (7) des vertrauenswürdigen Dritten;
- einen Schritt (70), darin bestehend, im Bereich des Servers (7) des vertrauenswürdigen Dritten eine zufällige Abfrage zu erzeugen, dann einen Schritt (76), darin bestehend, das "auszufüllende Formular" und die Abfrage vorzubereiten und an das mobile Kommunikationsendgerät (3) des Benutzers zu senden;
- nach Annahme (82) des "auszufüllenden Formulars" durch den Benutzer und Eingabe seines PIN-Codes einen Schritt (84), darin bestehend, im Bereich der vertrauenswürdigen Anwendung eine Antwort (R4) auf das Senden des "auszufüllenden Formulars" durch den vertrauenswürdigen Dritten zu berechnen;
- nach Eingabe (88) der Antwort (R4) durch den Benutzer beim Anwendungsdienst Berechnen (90) einer reduzierten Antwort (Resp_r) durch den Anwendungsserver;
- durch den Anwendungsserver (5) Übertragung (92) der Mobilnummer und der vorher berechneten reduzierten Antwort (Resp_r) an den Server (7) des vertrauenswürdigen Dritten;
- im Bereich des Servers (7) des vertrauenswürdigen Dritten Berechnen (94) eines Resultats (R6), und in Abhängigkeit von dem Wert des Resultats (R6) anzeige für den Anwendungsserver (5), ob der Benutzer das "auszufüllende Formular" gültig signiert hat oder nicht.

17. Signaturverfahren nach Anspruch 16, **dadurch gekennzeichnet, dass** die Antwort (R4) auf das Senden des "auszufüllenden Formulars" durch den vertrauenswürdigen Dritten durch die vertrauenswürdige Anwendung nach einer Funktion (F4) des "auszufüllenden Formulars", der Abfrage, des PIN und des Geheimschlüssels (Ks) berechnet wird.

18. Signaturverfahren nach Anspruch 16, **dadurch gekennzeichnet, dass** die reduzierte Antwort (Resp_r) durch den Anwendungsserver nach einer Funktion (F5) des H(PIN), des "auszufüllenden Formulars", der Antwort (R4) berechnet wird.

19. Signaturverfahren nach Anspruch 16, **dadurch gekennzeichnet, dass** das Resultat (R6) eine boolesche Funktion (F6) der Abfrage, des Geheimschlüssels (Ks) und der reduzierten Antwort (Resp_r) ist.

**Claims**

1. Method of two-factor authentication of a user with an application Service executing on an application server (5), in which the first authentication factor is a PIN authentication Code known solely to the user and to the Application Service, **characterized in that** the second authentication factor is the Mobile Communication Terminal (3) of the user on which a trusted Application obtained from a trusted Third Party or certified by it will have been installed, the said trusted Application being able to generate, with the aid of the said PIN authentication Code and of a secret key (Ks) shared solely with the trusted Third Party, a one-time-pad (OTP) authentication Code for each authentication of the user with the application Service, and characterized furthermore **in that** authentication of a user with an application Service comprises the following steps:

- subsequent to the inputting of his PIN authentication Code by the user, a step (46) of generating a one-time-pad (OTP) authentication Code with the aid of the trusted Application installed on his Mobile Communication Terminal (3);
- a step (50) of communicating the one-time-pad (OTP) authentication Code thus obtained to the application Service;
- a step (54) of transmission by the application Service of the one-time-pad (OTP) authentication Code in a reduced form, obtained with the aid of the said PIN authentication Code, to the trusted Third Party;
- a step (56) of verifying the one-time-pad (OTP) authentication Code in a reduced form by the trusted Third Party with the aid of the said secret key (Ks);
- a step (58) of notifying the result of the verification by the trusted Third Party to the application Service.

2. Method of authentication according to Claim 1, **characterized in that** the first authentication factor, namely the PIN authentication Code, is provided to the user by the application Service in a secure manner.

3. Method of authentication according to Claim 1, **characterized in that** the first authentication factor, namely the PIN authentication Code, is chosen by the user and communicated to the application Service in a secure manner.

4. Method of authentication according to Claim 1, **characterized in that** the secret Key (Ks) is created by the trusted Third Party and communicated in a secure manner to the trusted Application.

5. Method of authentication according to Claim 1, **characterized in that** the secret Key (Ks) is generated by the trusted Application and communicated to the trusted Third Party in a secure manner.

6. Method of authentication according to any one of the preceding claims, **characterized in that** it comprises, prior to the authentication of the user, a step of registration of the user with the Server (7) of the trusted Third Party, the said registration comprising steps consisting in:

- registering (2, 4, 6, 8, 10, 12) the user with the server (7) of the trusted Third Party;
- downloading and installing (14, 16, 18, 20, 22, 26, 28, 30) the trusted Application in the Mobile Communication Terminal (3);
- activating (32, 34, 36, 38) the said trusted Application so as to render it functional for the subsequent operations of authentication of the user with the application server (5).

7. Method of authentication according to Claim 6, **characterized in that** the phases from registration up to the activation of a user with a trusted Third Party are performed via an application Service and comprise the following steps:

- a step (2) of the user declaring his Mobile Number with the application Service;
- a step (6) consisting in requesting by the application Service the registration of the user with the trusted Third Party by communicating the user's Mobile Number thereto;
- a step (8) of allocating an authenticity Code to the user by the trusted Third Party followed by a step (10) of dispatching this authenticity Code to the application Service;
- a step (12) of communicating the authenticity Code to the user by the application Service;
- a step (14) of dispatching a message of SMS type to the user by the trusted Third Party, the said message of SMS type containing the parameters making it possible to load and to install the trusted Application on the Mobile Communication Terminal;
- a step (26) of loading and installing the trusted Application on the user's Mobile Communication Terminal;
- a step of activating the trusted Application after verification (28,30) of the authenticity Code;
- a step of generating a secret Key by the trusted Application;
- a step (32) of secure transmission of the secret Key and of the said parameters to the server of the trusted Third Party;
- a step (34) of verifying the elements received by the trusted Third Party and of initializing the registers of the user;
- a step (36) of dispatching an activation confirmation message to the trusted Application by the trusted Third Party.

8. Method of authentication according to Claim 6, **characterized in that** the phases of registration and of activation of a user are performed directly with a trusted Third Party and comprise the following steps:

- a step (6) of registering the user with the trusted Third Party;
- a step (8) of the user declaring his Mobile Number with the trusted Third Party and of validating the latter;
- a step (10) of communicating an authenticity Code to the user by the trusted Third Party;
- a step (14) of dispatching by the trusted Third Party a message of SMS type to the user containing the parameters allowing him to load and install the trusted Application on his Mobile Communication Terminal;
- a step (26) of loading and installing the trusted Application on the user's Mobile Communication Terminal;
- a step of activating the trusted Application after verification (28,30) of the authenticity Code;
- a step of generating a secret Key by the trusted Application;
- a step (32) of secure transmission of the secret Key and of the said parameters to the server of the trusted Third Party;
- a step (34) of verifying the elements received by the trusted Third Party and of initializing the registers of the user;
- a step (36) of dispatching an activation confirmation message to the trusted Application by the trusted Third Party.

9. Method of authentication according to Claim 7 or Claim 8, **characterized in that** the trusted Application is loaded and installed in a memory of the Mobile Communication Terminal, so as to render it executable by a microprocessor of the Mobile Communication Terminal.

10. Method of authentication according to Claim 7 or Claim 8, **characterized in that** the trusted Application is loaded and installed in a memory of the SIM card, so as to render it executable by the microprocessor of the SIM card or of the Mobile Communication Terminal.

11. Method of authentication according to Claim 7 or Claim 8, **characterized in that** the step of Activating the trusted Application is executed during the first execution of the trusted Application and comprises the following steps:

- Display (28) on the screen of the Mobile Communication Terminal of the authenticity Code, for verification by the user of the compliance thereof with the authenticity Code displayed during the step of registering the Mobile Communication Terminal;

- On reception (30) by the Mobile Communication Terminal of a confirmation by the user of the agreement of the authenticity Code displayed with the expected authenticity Code;
- Generation by the trusted Application of a secret Key (Ks) ;
- Construction of a message, on the basis of the withdrawal identifier, of the secret Key (Ks), and of the authenticity Code;
- Encipherment of the said message with the aid of the public key of the trusted Third Party;
- Setting to zero of a counter (counter_mobile) of one-time passwords (OTP) of the Mobile Communication Terminal;
- Transmission (32) of the message thus enciphered to the server (7) of the trusted Third Party;
- on reception by the server of the trusted Third Party, decipherment (34) of the said enciphered message, with the aid of the private key of the trusted Third Party, so as to extract the secret Key (Ks) generated in the Mobile and share this same secret Key (Ks) between the trusted Application and the server of the trusted Third Party;
- Verification of the authenticity Code extracted from the deciphered message;
- Setting to zero of a counter (Counter_base) of one-time passwords (OTP) at the level of the server of the Trusted Third Party;
- Transmission (36) to the Mobile Communication Terminal of a message of proper end of the activation of the trusted Application.

12. Method of authentication according to any one of the preceding claims, **characterized in that** the authentication of a user with the aid of the second authentication factor comprises:

- a step (40) consisting in the user launching on his Mobile Communication Terminal (3) the previously activated trusted Application and inputting (42,44) his PIN Code on the said Mobile Communication Terminal (3);
- a step (46) consisting in calculating the one-time-pad (OTP) authentication Code in the Mobile Communication Terminal (3) by means of the trusted Application, then in displaying (48) the one-time-pad (OTP) authentication Code thus calculated on the screen of the Mobile Communication Terminal;
- a step (50) consisting in asking the user to input at the level of the application server (5) his identifier (ID) and the one-time-pad (OTP) authentication Code thus calculated;
- at the level of the application server (5), a step (52) consisting in recovering the Mobile Number and the value substituting for the PIN as stored by the application Service, HPIN, on the basis of the stored identifier of the user, and then in calculating a reduced password (OTP_r) and in transmitting (54) the Mobile Number and the reduced password (OTP_r) to the server (7) of the trusted Third Party;
- at the level of the server (7) of the trusted Third Party, a step (56) consisting in calculating an Increment value and then in incrementing the value of the said counter (Counter_base) by the calculated Increment value, and then a step (58) consisting in returning an OK signal to the application server if the Increment is greater than zero, or a NOT OK signal in the converse case;
- at the level of the application server (5), if the signal received from the server (7) of the trusted Third Party is OK, a step (62) consisting in notifying the user that his authentication with the application Service (15) is successful, and, in the converse case, in notifying the user that his authentication has failed and denying him access to the application Service (15).

13. Method of authentication according to Claim 12, **characterized in that** the one-time-pad (OTP) authentication Code is calculated according to a function (F1) of the PIN authentication Code or the result of a function H applied to PIN, H(PIN), of the counter (Counter_mobile) of the Mobile Communication Terminal and of the secret Key (Ks) shared with the server of the trusted Third Party.

14. Method of authentication according to Claim 13, **characterized in that** the reduced password (OTP_r) is calculated according to a function (F2) of HPIN and of the one-time-pad (OTP) authentication Code.

15. Method of authentication according to Claim 13, **characterized in that** the Increment value is calculated according to a function (F3) of the value of the counter (Counter_base) of the server of the Trusted Third Party, of the secret Key (Ks) and of the reduced password (OTP_r).

16. Method of signing a transaction between an application server (5) and a user previously registered and authenticated with the said application server (5) in accordance with an authentication method according to any one of Claims 1 to 16, **characterized in that** it comprises the following steps:

- a step (66) consisting in preparing at the level of the application server (5) a "Permit to execute" (PTE) representative of the transaction to be signed, followed by the transmission (68) of the "Permit to execute" and of the Mobile Number of the user to the server (7) of the trusted Third Party;

- a step (70) consisting in generating at the level of the server (7) of the trusted Third Party a random Challenge, and then a step (76) consisting in preparing and dispatching the "Permit to execute" and the Challenge to the Mobile Communication Terminal (3) of the user;
- after acceptance (82) of the "Permit to execute" by the user and inputting of his PIN Code, a step (84) consisting in calculating at the level of the trusted Application a Response (R4) to the dispatching of the "Permit to execute" by the trusted Third Party;
- after inputting (88) of the Response (R4) by the user on the application Service, calculation (90) by the application Server of a reduced Response (Resp_r);
- transmission (92) by the application server (5) of the Mobile Number and of the previously calculated reduced Response (Resp_r) to the Server (7) of the trusted Third Party;
- at the level of the server (7) of the trusted Third Party, calculation (94) of a Result (R6) and, as a function of the value of the said Result (R6), indicating to the application Service (5) whether the user has validly signed the "Permit to execute" or not.

17. Method of signing according to Claim 16, **characterized in that** the said Response (R4) to the dispatching of the "Permit to execute" by the trusted Third Party is calculated by the trusted Application according to a function (F4) of the "Permit to execute", of the Challenge, of PIN, and of the secret Key (Ks).

18. Method of signing according to Claim 16, **characterized in that** the said reduced Response (Resp_r) is calculated by the application Service according to a function (F5) of H(PIN), of the "Permit to execute", of the said Response (R4).

19. Method of signing according to Claim 16, **characterized in that** the said Result (R6) is a boolean function (F6) of the Challenge, of the secret Key (Ks), and of the reduced Response (Resp_r).

Figure 1

Figure 2

Figure 3

Figure 4

Utilisateur

140

Service Applicatif

Tiers de Confiance

7

5

1

ID utilisateur + demande de désinscription

Récupère
Numéro de
Mobile

Désinscription Mobile

Vérifie que le Mobile
est déjà
inscrit/active et
supprime tous les
elements existants

Confirme la désinscription

OK

150

142

148

146

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002133467 A1